# EUROPÄISCHE PATENTSCHRIFT

(11) **EP 4 182 212 B1**
(45) Veröffentlichungstag und Bekanntmachung des Hinweises auf die Patenterteilung: **14.02.2024**
(21) Anmeldenummer: 21758602.3
(22) Anmeldetag: 01.07.2021
(51) Int. Cl.: B62K 5/027, B62K 5/06, B62K 7/04, B62K 19/20, B62K 19/04, B62K 25/08, B62K 23/04, B62K 23/06, B62K 21/12, B62L 1/00

(54) **DREIRÄDRIGES ELEKTROFAHRZEUG**
THREE-WHEEL ELECTRIC VEHICLE
VÉHICULE ÉLECTRIQUE À TROIS ROUES

(30) Priorität: 16.07.2020 DE 102020004287
(43) Veröffentlichungstag der Anmeldung: 24.05.2023
(73) Patentinhaber: Virant, Robert, 1000 Ljubljana (SI)
(72) Erfinder: Virant, Robert, 1000 Ljubljana (SI)
(74) Vertreter: Brehm, Hans-Peter
(86) Internationale Anmeldenummer: PCT/EP2021/000076
(87) Internationale Veröffentlichungsnummer: WO 2022/012772

(56) Entgegenhaltungen:
- CN-A- 106 275 183
- DE-B3-102019 003 129
- DE-U1-202015 102 809
- FR-A1- 2 977 229
- US-B2- 9 840 301

## Beschreibung

### TECHNISCHES GEBIET

Die vorliegende Erfindung betrifft ein dreirädriges Elektrofahrzeug, nämlich ein dreirädriges Kleinkraftrad für die Güterbeförderung, das für reinen Elektroanrieb ausgelegt ist, und das die gesetzlichen Vorgaben aus der Verordnung (EU) Nr. 168/13 des Europäischen Parlaments und des Rates vom 15. Januar 2013 für Fahrzeuge der EG-Fahrzeugklasse L2e, hier insbesondere der Unterklasse L2e-U erfüllt.

### GESETZLICHE ANFORDERUNGEN AN EIN L2e-U FAHRZEUG

In baulicher Hinsicht besagen diese Anforderungen unter anderem, dass
- eine Höchstgeschwindigkeit von 45 km/h eingehalten werden muss;
- im Falle eines Elektroantriebs der oder die Elektromotor(en) gemeinsam für eine maximale elektrische Nenndauerleistung oder Nutzleistung bis zu 4 kW ausgelegt ist/sind;
- Vorgaben hinsichtlich der Ladefläche bestehen;
   wobei ein Fahrzeug für den Gütertransport eine (Haupt)Ladefläche hat, die typischerweise als ebene Pritsche ausgebildet sein kann;
   - - eine Breite einer solchen, als ebene Pritsche ausgebildeten Ladefläche darf die Gesamtbreite des Fahrzeugs (ohne Ladefläche) nicht übersteigen;
   -- eine minimale Länge einer solchen Ladefläche muss größer/gleich 1/3 der Fahrzeuglänge sein;
   -- eine maximale Länge einer solchen Ladefläche darf das 1,4-Fache der (größeren) Fahrzeugspurweite der vorderen oder hinteren Spurweite des Fahrzeugs der Klasse L nicht überschreiten; und
   - - die Ladefläche darf nicht höher als 1000 mm über der Fahrbahn liegen;
- ferner gibt es Vorgaben, welche das zulässige Fahrzeug-Leergewicht und die maximale Zuladung begrenzen; die (bestimmt definierte) Masse eines dreirädrigen Kleinkraftrades der Klasse L2e darf 270 kg nicht übersteigen; und diese maximale Zuladung darf 300 kg nicht übersteigen.

Bei der vorstehend genannten maximalen elektrischen Nenndauerleistung von 4 kW handelt es sich um die nach Regelung ECE-R85 (aus 2006) definierte "Höchste 30-Minuten-Leistung", die das elektrische Antriebssystem über einen Zeitraum von 30 Minuten im Durchschnitt abgeben kann; zu deren Prüfung muss sich der Leistungsregler (hier: Beschleunigungsdrehgriff am Fahrzeuglenker) 30 Minuten lang in der Endstellung befinden, während Drehmoment und Drehzahl gleichzeitig aufgezeichnet werden.

Sofern das elektrische Antriebssystem eine höhere elektrische Nutzleistung als diese zulässige maximal Nenndauerleistung von 4 kW bereitstellen könnte, muss ein Regler bzw. Controller am Fahrzeug dafür sorgen, dass im Dauer- bzw. Regelbetrieb tatsächlich nur die zulässige maximale Nenndauerleistung bis zu 4 kW bereitgestellt wird. Jedoch darf das elektrische Antriebssystem kurzfristig (etwa im Rahmen einer "Boosterfunktion") eine höhere elektrische Nutzleistung bereitstellen, etwa zum Anfahren des Fahrzeugs oder dann, wenn das Fahrzeug eine Steigung oder ein Hindernis überwinden muss.

Die Fahrzeuge bedürfen einer behördlichen Zulassung (Typengenehmigung nach der Richtlinie 2002/24 EG). Wird in einem EU-Staat eine EU-Gesamtfahrzeug-Typgenehmigung gemäß der Verordnung (EU) Nr. 168/2013 erlangt, so berechtigt diese Genehmigung verbunden mit einem "Certificate of Conformity" auch den Betrieb des baugleichen Fahrzeugs in allen anderen EU-Staaten.

Vorteile für die Nutzer und Betreiber derartiger L2e-U Fahrzeuge bestehen unter anderem darin, dass
- der Fahrer nur einen Führerschein der Klasse "S" (= "Mopedführerschein") benötigt;
- das Fahrzeug lediglich mit einem "Mopedkennzeichen" versehen werden muss, so dass niedrige Steuern und Versicherungskosten anfallen; und
- das Fahrzeug nicht den für PKW üblichen TÜV-Untersuchungen unterliegt.

Typischerweise handelt es sich um kleine, wendige Fahrzeuge, die hervorragend für den Transport von Gütern, einschließlich Postgut, und sonstige logistische Dienstleistungen im urbanen Bereich einsetzbar sind und dabei wenig Energie benötigen.

### ZUM STAND DER TECHNIK

Das Dokument DE 20 2018 106 199 U1 beschreibt unter der Bezeichnung "dreirädriges Mopedauto" ein für den Gütertransport geeignetes Fahrzeug, das mit Elektroantrieb ausgestattet sein kann. Unter "Mopedautos" werden hier kleine Fahrzeuge verstanden, die mit maximal 45 km/h über die Straße fahren dürfen. Das hier im Einzelnen beschriebene Mopedauto ist mit drei Rädern ausgerüstet und hat eine Karosserie, die eine dem Vorderrad zugeordnete Fahrerkabine, sowie eine den Hinterrädern zugeordnete Ladefläche trägt; hierbei ist das Vorderrad in Fahrtrichtung vor der Fahrerkabine angeordnet; und Vorderrad und Hinterräder sind mit je einem Antriebsaggregat verbindbar ausgebildet; hierbei kann insbesondere dem Vorderrad ein elektrischer Radnabenmotor als Antriebsaggregat zugeordnet sein. Die Besonderheit besteht darin, dass die Fahrerkabine einen Vorbau aufweist, der über das Vorderrad hinausreichend ausgebildet ist, und dass das Fahrzeug eine in Skelettbauweise ausgebildete Karosserie hat, die eine Ladefläche bzw. einen Strukturkasten trägt. Der Vorbau kann eine gewölbte Haube bilden, die eine LKW-gemäße Front hat und die mit einer Stoßstange versehen ist. Der Strukturkasten kann in Fahrtrichtung hinter der Fahrerkabine angeordnet und in die Karosserie integriert sein und kann ganz oder teilweise aus Hohlrohren bestehen. Das Dokument beschränkt das hier beschriebene Mopedauto nicht auf die Merkmale eines Fahrzeugs, das für die Güterbeförderung bestimmt ist, und das die Forderungen der EG-Fahrzeugklasse L2e-U erfüllt.

Das Dokument US 2009/0255747 A1 betrifft ein dreirädriges Elektrofahrzeug zur Beförderung einer stehenden Person. Das Fahrzeug hat einen modularen, aus vier Untereinheiten bestehenden Aufbau, nämlich mit einer Vorderradgabel, an der sich ein Vorderrad befindet, mit einer Lenkeranordnung, ferner mit einem, aus Skelettelementen gebildeten Hauptfahrgestell, und schließlich mit einer rückwärtigen Radaufhängungsanordnung mit zwei parallelen Längslenkern, an denen je ein motorisch angetriebenes Hinterrad angebracht ist. Diese vier Untereinheiten sind über Standard-Schraubverbindungen miteinander verbunden. Das Hauptfahrgestell trägt eine Plattform, auf welcher die zu befördernde Person stehen kann und in dieser Stellung die Lenkeranordnung bedienen kann. Zwischen den beiden Längslenkern ist ein rohrförmiger Drehstabstabilisator eingespannt. Jeder Längslenker ist über je einen Federstoßdämpfer an einem oberen Träger des Hauptfahrgestells abgestützt.

Das Fahrzeug ist mit einem Bremssystem ausgerüstet, das mechanisch wirkende Bremsen und/oder elektromagnetisch und regenerativ wirkende Bremsen aufweist.

Das Dokument GB 2 394 701 A betrifft ein neigbares, motorisch angetriebenes Dreirad zur Beförderung einer sitzenden Person. Als Antriebsmotor dient ein wassergekühlter Verbrennungsmotor. Das Dreirad hat ein Fahrgestell, das aus einem Vorderrahmen und aus einem Hinterrahmen besteht. Am Hinterrahmen sind der Antriebsmotor und die beiden, motorisch angetriebenen Hinterräder angebracht, über welche das Dreirad eine stabile Anordnung auf der Fahrbahn einnimmt. Am Vorderrahmen ist eine lenkbare Gabel mit dem Vorderrad sowie ein Fahrersitz angebracht. Eine Besonderheit besteht darin, dass der Vorderrahmen über zwei Schwenklager mit dem Hinterrahmen verbunden ist.

Das tief angeordnete vordere Schwenklager befindet sich am Vorderende des Hinterrahmens, unterhalb des Vorderrahmens. Das hoch angeordnete hintere Schwenklager befindet sich am Hinterrahmen, oberhalb des Fahrersitzes. Der Vorderrahmen mit seinen Komponenten ist gegenüber dem Hinterrahmen um eine gerade Schwenkachse neigbar, kippbar oder schwenkbar angeordnet, die sich vom Berührungspunkt des Vorderrades auf der Fahrbahnoberfläche weg durch das vordere Schwenklager bis zum hinteren Schwenklager erstreckt; entsprechend einer Seitenansicht-Darstellung des Dreirads kann diese Schwenkachse mit der Richtung der Fahrbahn einen Winkel von 25 Grad einschließen. Weil der Schwerpunkt des Fahrergewichtes unterhalb dieser Schwenkachse liegt, wird die vom Fahrergewicht erzeugte, nach unten gerichtete Kraft den Fahrersitz immer in die tiefste Position drücken, und damit das Dreirad in eine aufrechte Position bringen. Ein Lenkung des Dreirads erfolgt analog zum herkömmlichen Motorrad durch Lenkung des Vorderrades und durch seitliche Verlagerung des Fahrergewichtes, was eine Neigung des Vorderrades gegenüber den stabil gehaltenen Hinterrädern bewirkt. Mit dieser Bauweise sollen höhere Kurvenfahrt-Geschwindigkeiten möglich sein, als mit einem herkömmlichen Motorrad. Wie den Zeichnungen entnommen werden kann, sind sowohl der Vorderrahmen wie der Hinterrahmen des Dreirads in Skelettbauelementen aufgebaut.

Das Dokument DE 10 2017 116 733 A1 betrifft eine Kontrolleinrichtung für mindestens einen Radnabenmotor an einem Fahrzeug. Fährt das Fahrzeug über unebenen Untergrund, dann können am Fahrzeug schwingende oder oszillierende Aufbaubewegungen stattfinden, welche durch Unebenheiten der Fahrbahnoberfläche oder fahrdynamische Effekte verursacht werden. Die vom Radnabenmotor bewirkte Momenteinleitung verursacht nicht nur eine Beschleunigung des Fahrzeugs in der oder gegen die Fahrtrichtung, sondern wegen der Abstützung des Radnabenmotors am Fahrzeugchassis wird durch solche Momenteinleitung das Fahrzeug zusätzlich in Höhenrichtung beschleunigt und/oder mit sonstigen Kräften beaufschlagt. Durch eine entsprechende Ansteuerung des Radnabenmotors soll durch den Radnabenmotor eine Kraft in der und/oder gegen die Höhenrichtung eingestellt werden, um auf diese Weise Schwingungen zu dämpfen, die beispielsweise durch Befahren eines unebenen Untergrundes auftreten. Die Kontrolleinrichtung soll eine solche Ansteuerung des Radnabenmotors bewirken.

Hierzu kann die Kontrolleinrichtung als digitale Datenverarbeitungseinrichtung ausgebildet sein, insbesondere als ein Computer, ein Mikrocontroller, ein FPGA oder dergleichen realisiert sein. Die Kontrolleinrichtung weist eine Eingangsschnittstelle zur Übernahme eines Zustandssignals zur Beschreibung einer aktuellen Aufbaubewegung des Fahrzeugs auf. Ferner weist die Kontrolleinrichtung eine Ausgangsschnittstelle zur Ausgabe des Radnabensignals auf. Weiterhin weist die Kontrolleinrichtung ein Kontrollmodul auf, welches programmtechnisch und/oder schaltungstechnisch so ausgebildet ist, um das Radnabenmotorsignal als Antwort auf die Aufbaubewegung zu bestimmen, insbesondere zu berechnen. Wie eine solche Berechnung ausgeführt werden könnte, wird nicht weiter ausgeführt.

Eine derartige oder vergleichbare Kontrolleinrichtung wird im Rahmen der vorliegenden Unterlagen als "Controller" bezeichnet.

Das Dokument DE 10 2018 007 249 A1 offenbart unter anderem ein dreirädriges Lastenfahrrad mit einem Gestell, an dem ein Vorderrad sowie zwei Hinterräder montiert sind. Das Gestell umfasst Vertikalsäulen und zumindest einen Querträger, die gemeinsam einen Laderaum begrenzen, in den eine, zum Transport von Transportgut dienende Transportbox eingebracht werden kann. Die Transportbox ist für einen austauschbaren bzw. wechselbaren Betrieb ausgelegt und wird mit Hilfe einer Aufnahmevorrichtung lösbar an den Vertikalsäulen und dem Querträger befestigt und gehalten. Die Aufnahmevorrichtung hat einen, längs der Vertikalsäulen verschieblich gehaltenen Aufnahmehaken mit einer Aufnahmeöffnung, in die ein, an der Transportbox angebrachter Riegel eintreten kann. In einer Verriegelungsstellung zwischen Aufnahmehaken und Riegel hält das Gewicht der Transportbox den Riegel innerhalb der Aufnahmeöffnung. Zusätzlich sichert ein Spannstift die Verriegelungsstellung des Riegels im/am Aufnahmehaken.

Das Dokument FR 2 977 229 A1 betrifft ein Dreirad mit einem Transportbehälter. Das Dreirad hat eine, mit zwei Rädern ausgerüstete Hinterachse, die über eine Kette drehbar ist, die ihrerseits vom Dreiradfahrer über ein Tretlager mit Kurbelantrieb, gegebenenfalls mit Elektromotorunterstützung, angetrieben wird. Das Dreirad hat einen aus Metallprofilen bestehenden Rahmen einschließlich zwei Schienen, die zueinander parallel und beabstandet ausgerichtet sind. Der Transportbehälter ist oberhalb der Hinterachse an diesen Schienen lösbar und austauschbar anbringbar. Hierzu sind an jeder Schiene zwei bügelförmige Aufnahmeelemente angebracht, die je zusammen mit der Schiene einen sich konisch verjüngenden Hohlraum begrenzen. Wenn der Transportbehälter auf den beiden Schienen angeordnet wird, kann in jeden Hohlraum je ein konisches Befestigungselement eintreten, das an der Unterseite des Transportbehälters angebracht ist. In jedem Aufnahmeelement und in jedem Befestigungselement, ist je eine Bohrung ausgespart, die paarweise miteinander fluchten, wenn das Befestigungselement in den vom Aufnahmeelement begrenzten Hohlraum eingetreten ist. Je ein, in einem Rohr geführter und von Hand verstellbarer, stabförmiger Riegel kann aus einer vom Aufnahmeelement entfernten Riegel-Freigabe-Position vom Benutzer per Hand in eine Riegel-Feststell-Position verstellt werden, nämlich in die gemeinsame fluchtende Bohrung an Aufnahmeelement und eingeführtem Befestigungselement eingeführt werden. Wenn der Riegel diese Riegel-Feststell-Position einnimmt, kann der Transportbehälter nicht vom Dreiradrahmen gelöst und getrennt werden kann. Es gibt keine Erwähnung, dass der Riegel und die Riegelverstellung in irgendeiner Art und Weise mit einer Bremse am Dreirad gekoppelt wäre.

Das Dokument CN 106275183 A betrifft ein elektromotorisch angetriebenes Dreirad mit einem geschlossenen kastenförmigen Transportbehälter. Das Dreirad hat einen, in Skelett-bauweise ausgeführten Rahmen, an dessen Vorderende eine Teleskopfedergabel schwenkbar angelenkt ist, an der ein elektromotorisch antreibbares Vorderrad drehbar gehalten ist. Für den Vorderradantrieb sorgt ein Vorderrad-Elektromotor, der aus einer Vorderrad-Batterie mit elektrischer Energie versorgt wird. Zwischen Vorderrad-Batterie und Vorderrad-Elektromotor ist ein elektrischer Stromschalter geschaltet. Der Transportbehälter befindet sich im hinteren Fahrzeugbereich und ist dort schwenkbar am Fahrzeugrahmen angelenkt; eine Hydraulikeinrichtung kann den Transportbehälter in eine Kippstellung verstellen, so dass im Transportbehälter transportiertes Schüttgut den Behälter durch eine geöffnete Türe am hinteren Behälterende selbsttätig verlassen kann. Unterhalb des Transportbehälters ist am Fahrzeugrahmen eine Hinterachse drehbar angelenkt, die an ihren Enden je ein Hinterrad trägt. Die Hinterachse wird über ein Getriebe und einen Antriebsstrang von einem weiteren Elektromotor angetrieben, der unterhalb eines Fahrersitzes angeordnet ist. Der Hinterachse ist eine Bremstrommel eines mechanisch arbeitenden Bremssystems zugeordnet. Das Bremssystem hat einen, neben dem Fahrersitz auf dessen Höhe angeordneten Handbremshebel sowie ein Fußbremspedal; die durch Betätigung von Handbremshebel und Fußbremspedal aufgebrachte Bremskraft wird über Bremshebel und Bremskabel auf die Bremsbacken an der Bremstrommel übertragen. Die durch Betätigung von Handbremshebel und Fußbremspedal bewirkte Verstellung eines Bremshebels wirkt über eine mechanische Kopplung auch auf den zwischen Vorderrad-Batterie und Vorderrad-Elektromotor geschalteten Stromschalter. Der Bremsvorgang verstellt diesen Stromschalter in eine Sperrstellung, wodurch die Stromverbindung zwischen der Vorderrad-Batterie und dem Vorderrad-Elektromotor unterbrochen wird; der Bremsvorgang unterbricht und beendet den elektrischen Vorderradantrieb.

Das Dokument DE 10 2019 003 129 B3 betrifft ein dreirädriges Elektrofahrzeug nach EG-Fahrzeugklasse L2e-U. Es wird unter anderem gesagt, dass
- das Elektrofahrzeug eine steife, selbsttragende, in Skelettkarosserie-Bauweise aus geführte Karosserie hat, deren Skelettelemente überwiegend aus metallischen, runden Rohren und hohlen Vierkantprofilen bestehen, die zumeist miteinander verschweißt sind;
- an einem Vorderende der Karosserie eine Teleskopfedergabel schwenkbar angelenkt ist, an der ein Vorderrad und ein Fahrzeuglenker mit verschiedenen Bedienungselementen, einschließlich einem Bremshandgriff montiert ist;
- das Elektrofahrzeug zwei elektromotorisch angetriebene Hinterräder hat, die je über je eine Radaufhängung an der Karosserie gehalten sind;
- an jedem Hinterrad zum elektromotorischen Antrieb je ein Radnabenmotor getriebelos befestigt ist, der je mit einer integrierten Motorsteuerung versehen ist, und der je für eine maximale Nenndauerleistung größer 2 kW und kleiner 6 kW ausgelegt ist, insbesondere für eine maximale Nenndauerleistung von etwa 4 kW ausgelegt ist;
- jedes Hinterrad mit je einer Hinterrad-Scheibenbremsanlage ausgerüstet ist, die beim Anziehen des Bremshandgriffes mit Hydraulikmitteldruck beaufschlagt wird, um einen regulären, hydraulisch bewirkten Bremsvorgang der Hinterräder auszuführen;
- am Elektrofahrzeug ein, mit Datenspeicherkapazität und digitaler Datenverarbeitungskapazität ausgerüsteter Controller montiert ist, der unter anderem dafür sorgt, dass im Regelbetrieb die von beiden Radnabenmotoren zusammen gelieferte Nenndauerleistung 4 kW nicht übersteigt; und
- die Karosserie in einem hinteren Fahrzeugbereich eine Stützkonstruktion bildet, auf der ein wahlweise vorhandener, auswechselbarer Transportbehälter abstützbar und daran mit Hilfe eines Schnellverschlusssystems festhaltbar ist.

Wie ein solches "Schnellverschlusssystem" ausgestaltet sein kann, wird in dieser Patentanmeldung nicht gesagt.

Ein auf einer Ladefläche an einem Fahrzeug nach EG-Fahrzeugklasse L2e-U abstützbarer Transportbehälter gilt nicht notwendigerweise als Bauteil bzw. Bestandteil des Fahrzeugs, sondern kann als Teil der Ladung eingestuft werden. Nach den gesetzlichen Vorgaben gilt die Ladung dann nicht als Teil des Fahrzeugs, wenn sie nicht fix mit dem Fahrzeug verbunden ist. "Nicht fix" bedeutet hier, dass die Ladung mit einfachem Bordwerkzeug oder durch Schnellverschluss leicht vom Fahrzeug zu trennen ist. Ein mit Hilfe von Schnellverschluss vom Fahrzeug trennbarer Transportbehälter gilt folglich nicht als Bestandteil des Fahrzeugs.

### AUFGABE DER VORLIEGENDEN ERFINDUNG

Die mit der vorliegenden Erfindung zu lösende Aufgabe kann darin gesehen werden, ein dreirädriges Elektrofahrzeug nach dem Dokument DE 10 2019 003 129 B3 mit einem durch eine Parksperre gesteuerten Schnelllösemechanismus zur Sicherung der Ladung auf dem Lastenträger auszustatten. Es soll insbesondere möglich sein, einen Transportbehälter gegebener Bauart gegen einen Transportbehälter gleicher Bauart - aber mit anderem Inhalt - schnell und sicher auszutauschen und am Elektrofahrzeug während des üblichen Fahrbetriebs sicher festzuhalten.

Ein solcher Austausch von Transportbehältern gleicher Bauart kommt insbesondere und beispielsweise dann in Betracht, wenn ein, mit vorbereitetem bestimmten Postgut befüllter Transportbehälter rasch und sicher am Elektrofahrzeug befestigt werden soll, und nach Erledigung des Auftrags rasch und sicher gegen einen anderen vorbereiteten Transportbehälter gleicher Bauart ausgetauscht werden soll, der mit neuem, zu verteilendem, anderem Postgut befüllt ist, um rasch einen neuen weiteren Auftrag mit diesem Elektrofahrzeug ausführen zu können.

### DIE ERFINDUNGSGEMÄSSEN LÖSUNGEN DIESER AUGABE

Mit der vorliegenden Erfindung wird ein dreirädriges Kleinkraftrad für die Güterbeförderung bereitgestellt, das für reinen Elektroantrieb ausgelegt ist, und das die gesetzlichen Vorgaben aus der Verordnung (EU) Nr. 168/13 des Europäischen Parlaments und des Rates vom 15. Januar 2013 für Fahrzeuge der EG-Fahrzeugklasse L2e, hier insbesondere der Unterklasse L2e-U erfüllt.

Ausgehend von einem dreirädrigen Elektrofahrzeug nach DE 10 2019 003 129 B3 mit den vorstehend angegebenen genannten Merkmalen
ist **eine erfindungsgemäße Lösung obiger Aufgabe**
**dadurch gekennzeichnet, dass**
- jede Hinterrad-Scheibenbremsanlage zusätzlich mit einer integrierten, vom Controller kontrollierten, elektromechanischen Parkbremse ausgerüstet ist, deren Aktivierung eine Drehung jedes Hinterrades verhindert, was einen Parkbremsmodus einstellt; und
- das Schnellverschlusssystem eine oder mehrere Verbindungseinrichtung(en) aufweist, wobei jede Verbindungseinrichtung
   - - einen Riegel hat, der von einer Bodenwand am Transportbehälter nach außen absteht; und
   -- eine, an der Stützkonstruktion dauerhaft angebrachte und mit einem verstellbaren Sperrglied ausgerüstete Verriegelungseinrichtung hat, welche im Falle des auf der Stützkonstruktion abgestützten Transportbehälters dessen Riegel aufnimmt und mit dem verstellbaren Sperrglied wahlweise festhält, das hierzu eine den Riegel festhaltende Position, nachstehend: Riegel-Festhalte-Position oder eine, vom Riegel entfernte Position, nachstehend: Riegel-Freigabe-Position einnimmt; und
- dafür gesorgt ist, dass das Sperrglied nur dann aus der Riegel-Festhalte-Position in die Riegel-Freigabe-Position verstellt werden kann, wenn sich jedes Hinterrad im Parkbremsmodus befindet.

Eine solche Sperrgliedverstellung kann von einer Bedienungsperson unmittelbar von Hand oder mittelbar mit Hilfe eines von der Bedienungsperson verstellbaren und auf das Sperrglied mechanisch einwirkenden Stellgliedes vorgenommen werden. Alternativ kann eine solche Sperrgliedverstellung vom Controller veranlasst und bewirkt werden, der hierzu einen an der Verriegelungseinrichtung vorgesehenen Elektromotor ansteuert, um das Sperrglied zu verstellen. Nachstehend wird im ersten Falle von einer mechanischen Sperrgliedverstellung sowie im zweiten Falle von einer elektrischen Sperrgliedverstellung gesprochen. Mit der mechanischen Sperrgliedverstellung wird eine erste Ausführungsform der vorliegenden Erfindung bereitgestellt, und mit der elektrischen Sperrgliedverstellung wird eine zweite Ausführungsform der vorliegenden Erfindung bereitgestellt.

Die Koppelung der Verbindungseinrichtung mit dem Parkbremsmodus schafft ein einfaches und sicheres Schnellverschlusssystem. Das Schnellverschlusssystem muss vom Fahrzeugnutzer lediglich initiiert werden und wird daraufhin vom Controller anhand der im Controller gespeicherten Daten und Programme automatisch ausgeführt und kontrolliert.

Das erfindungsgemäß vorgesehene und im Rahmen dieser Unterlagen beschriebene dreirädrige Elektrofahrzeug für Gütertransporte, nach EG-Fahrzeugklasse L2e-U, wird nachstehend kurz als "das Fahrzeug" bezeichnet.

### VORTEILHAFTE AUSGESTALTUNGEN

Vorteilhafte und bevorzugte Ausführungsformen der Erfindung ergeben sich aus den Unteransprüchen, der nachfolgenden Beschreibung und den beigefügten Zeichnungen.

Am Fahrzeug ist ein, mit Datenspeicherkapazität und digitaler Datenverarbeitungskapazität ausgerüsteter Controller montiert; typischerweise ist der Controller in Form einer Platine ausgeführt, auf der sich ein Mikrokontroller mit Mikroprozessor sowie Peripheriegeräte und weitere übliche Komponenten befinden, hier insbesondere die Niedrigstromversorgung für den Mikrokontroller, Analog-nach-digital-Wandler, sowie Filter und Schutzvorrichtungen, welche den Mikrokontroller vor gefährlichen Signalstärken der zugeführten Signale schützen. Der Mikrokontroller kann ein handelsüblicher Chip sein. Im Mikrokontroller ist speziell für das Fahrzeug entwickelte Software gespeichert, welche die verschiedenen Eingangssignale verarbeitet und Ausgangssignale bildet, mit denen die verschiedenen Funktionen gesteuert und ausgeführt werden, hier insbesondere auch die Motorsteuerung durchgeführt wird. Der Controller verfügt über eine ganze Anzahl von Eingangsschnittstellen, etwa zur Übernahme von, die aktuelle Fahrzeuggeschwindigkeit wiedergebenden Signalen, von Bremssignalen, von Zustandssignalen zum Zustand der Batterien, von Betriebssignalen zum IST-Betrieb der beiden Motoren und von weiteren Signalen, wie etwa Fahrzeugbeleuchtung-AN, Blinker-AN und dergleichen. Diese Eingangssignale werden im Mikrokontroller entsprechend den Vorgaben der gespeicherten Software verarbeitet, um (An)-Steuersignale zur Steuerung der Fahrzeugfunktionen zu erhalten. Diese (An)-Steuersignale werden über Ausgangsschnittstellen am Controller ausgegeben, etwa zur Darstellung der Anzeigen auf einer Displayeinrichtung am Fahrzeug, für die Betätigung der Bremslichter an der Fahrzeugrückwand, für die Motorsteuerungen der beiden Motoren und dergleichen.

So sorgt der Controller unter anderem dafür, dass mit Hilfe dieser Motorsteuersignale unter anderem bewirkt wird, dass
- im Dauer- bzw. Regelbetrieb das aktuelle, von beiden Motoren gemeinsam erzeugte Drehmoment eine Nenndauerleistung von 4 kW nicht übersteigt;
- die Betätigung des Bremshandgriffes am Fahrzeuglenker zuerst ein elektrisches Bremssignal erzeugt, das dem Controller zugeführt wird, der daraufhin die Motorsteuerung in jedem Antriebsmotor in einen Rekuperations-Betriebsmodus umsteuert, so dass die Fahrzeuggeschwindigkeit anfänglich mit Hilfe einer Motorbremsung vermindert wird;
- nach Betätigung eines Parkbremsschalters die Komponenten der elektromechanischen Parkbremse im Bremssattel jeder Hinterrad-Scheibenbremsanlage jedes Hinterrad in einen Parkbremsmodus versetzen, in dem eine Drehung des Hinterrades verhindert ist; und
- bei Vorliegen eines Rückwärtsfahr-Signales beide Motoren in den Rückwärtsfahr-Modus umgesteuert werden.

Die Communication zwischen dem Controller und den Motorsteuerungen sowie von weiteren elektrisch kontrollierten Komponenten und Funktionen am Fahrzeug erfolgt über das übliche CAN-Bussystem ("CAN" steht hier für Controller Area Network).

Ferner gehört es zu den Funktionen des Controllers, das erfindungsgemäß vorgesehene Schnellverschlusssystem zu steuern und zu kontrollieren.

Am erfindungsgemäßen Elektrofahrzeug ist jedes Hinterrad mit einer Hinterrad-Scheibenbremsanlage ausgerüstet, die eine hydraulisch betätigbare Bremseinrichtung hat, und die zusätzlich mit einer elektromechanischen Parkbremse versehen ist; eine Aktivierung der elektromechanischen Parkbremse versetzt jedes Hinterrad in einen Parkbremsmodus, in dem eine Drehung des Hinterrades verhindert ist. Solche kombinierten Scheibenbremsanlagen sind grundsätzlich bekannt.

Eine typische, hydraulisch betätigbare Scheibenbremsanlage zur Durchführung eines regulären, hydraulisch bewirkten Bremsvorganges hat eine, mit dem zu bremsenden Rad drehfest gekoppelte Bremsscheibe und einen auf die Bremsscheibe wirkenden, ortsfest an der Radaufhängung befestigten Bremssattel, in/an dem sich eine Bremszylinder/Bremskolben-Anordnung befindet. Durch Betätigung des Bremspedals am Kraftfahrzeug oder des Bremshandgriffes am erfindungsgemäßen Fahrzeug wird in einem Hydraulikmittel-System erhöhter Hydraulikmitteldruck erzeugt, der über Hydraulikmittelleitungen der Bremszylinder/Bremskolben-Anordnung zugeführt wird, dort den Bremskolben beaufschlagt und diesen innerhalb des Bremszylinders verstellt. Diese Bremskolbenverstellung wird über Bremsaktuatoren auf die Bremsbeläge übertragen, die dadurch gegen die Bremsscheibe gepresst werden und einen regulären hydraulisch bewirkten Bremsvorgang am Rad auslösen.

Am erfindungsgemäßen Elektrofahrzeug ist jedes Hinterrad mit einer Hinterrad-Scheibenbremsanlage ausgerüstet, die eine solche, hydraulisch betätigbare Bremseinrichtung hat, und die zusätzlich mit einer "elektromechanischen Parkbremse" versehen ist. Unter "elektromechanischer Parkbremse" sollen hier Bremseinrichtungen verstanden werden, die in der Fachwelt (und von verschiedenen Herstellern) unter anderem als "bremssattelintegrierte" elektro-mechanische Feststellbremse, bzw. als elektromechanische Parkbremse bzw. als elektrische Parkbremse (EPB) bezeichnet werden.

Die Betätigung einer solchen elektromechanischen Parkbremse versetzt jedes Hinterrad in einen Parkbremsmodus, in dem eine Drehung des Hinterrades verhindert ist.

Eine solche elektromechanische Parkbremse hat einen elektrischen Parkbremsmotor, der über einen Zahnriemen einen mehrstufigen, ein hohes Untersetzungsverhältnis liefernden Getriebemechanismus treibt, von dem wiederum eine mit Außengewinde versehene Spindel angetrieben wird, die eine mit dem Bremskolben gekoppelte Vorschubmutter in Drehung versetzt. Je nach Drehrichtung der Spindel wird die Vorschubmutter am Spindelgewinde vorwärts oder rückwärts bewegt. Eine Vorwärtsbewegung bringt die Vorschubmutter in Kontakt mit dem Bremskolben und verstellt diesen innerhalb des Bremszylinders. Wegen des hohen Untersetzungsverhältnisses (beispielsweise bis zu 50 : 1) wird bei kurzem Weg hohe Kraft auf die Bremsbeläge übertragen, die das Rad schnell, sicher und dauerhaft zum Stillstand bringen; das mit der elektromechanischen Parkbremse gekoppelte Hinterrad wird in einen Parkbremsmodus versetzt, in dem eine Drehung des Hinterrades unterbunden ist. Jede elektromechanische Parkbremse hat eine, in den Bremssattel integrierte, Parkbremssteuereinheit, die vom Controller angesteuert und kontrolliert wird. Während einer Aktivierung der Parkbremse zieht der Parkbremsmotor Strom, was von der Parkbremssteuereinheit registriert und dem Controller gemeldet wird; folglich kennt der Controller den Parkbremsmodus-Zustand jedes Hinterrades. Der Spindelmechanismus ist selbstarretierend, so dass ein, von der aktivierten Parkbremse geschaffener Parkbremsmodus auch bei stromlos geschaltetem Fahrzeug arretiert und wirksam bleibt. Im Falle einer Notbremssituation kann zusätzlich zu dem mit einem Anziehen des Bremshandgriffes am Fahrzeuglenker auslösbaren regulären Bremsvorgang auch der Parkbremsmodus aktiviert werden; weil dieser Parkbremsvorgang recht abrupt greift, prüft der Controller die aktuelle Fahrzeuggeschwindigkeit, und löst bei bewegtem Fahrzeug den Parkbremsmodus nur dann aus, wenn die Fahrzeuggeschwindigkeit weniger als 2 km/h beträgt.

Solche elektromechanischen Feststellbremsen bzw. elektromechanische Parkbremsen oder elektrische Parkbremsen (EPB) sind bekannt, beispielsweise in dem Dokument WO 2011/029812 A1 beschrieben. Die am erfindungsgemäßen Fahrzeug für die Hinterräder vorgesehene, hydraulisch betätigbare Hinterrad-Scheibenbremsanlage mit integrierter elektromechanischer Parkbremse kann beispielsweise von Continental Automotive GmbH, 30165 Hannover, DEUTSCHLAND unter der Fachbezeichnung EPB-Ci (steht für:
Electric Parking Brake - Caliper integrated) bezogen werden;
hier Continental Teil-Nr. 11.6236-0089.4 für eine Bremsanlage am linken Hinterrad sowie Continental Teil-Nr. 11.6236-0090.4 für eine Bremsanlage am rechten Hinterrad.

Wie oben ausgeführt, werden die, einen auswechselbaren Transportbehälter am Fahrzeug festhaltenden Verbindungseinrichtungen den festgehaltenen Transportbehälter nur dann freigeben, wenn sich die beiden Hinterräder im Parkbremsmodus befinden.

Am Fahrzeug, vorzugsweise an dessen Fahrzeuglenker ist neben dem Bremshandgriff, ein elektromechanischer Parkbremsschalter angebracht, der von einer Bedienungsperson betätigt wird, um einen Parkbremsmodus zu initiieren, oder einen bestehenden Parkbremsmodus zu deaktivieren. Der betätigte Parkbremsschalter generiert ein entsprechendes Parkbremssignal, das dem Controller zugeführt wird, der daraufhin - nach Prüfung weiterer Umstände - den Parkbremselektromotor in jeder Hinterrad-Scheibenbremsanlage so ansteuert, das der Parkbremsmodus aktiviert oder deaktiviert wird.

Nach einer vorteilhaften Ausgestaltung kann bei dieser ersten Ausführungsform der Erfindung vorgesehen sein, dass
- eine an und längs der Stützkonstruktion verschiebbar gehaltene und geführte Verriegelungsstange vorhanden ist, die einen vorderen Endabschnitt hat, der das Sperrglied bildet, und die einen dazu entfernten hinteren Endabschnitt hat, der ein Griffstück bildet, das sich typischerweise im Bereich einer Fahrzeugrückwand befindet und dort von einer Bedienungsperson gegriffen werden kann, die von Hand und mechanisch die Verriegelungsstange so verstellt, dass das Sperrglied die Riegel-Festhalte-Position oder die Riegel-Freigabe-Position einnimmt; und
- der Riegel ein gerades längliches Vierkantstück aufweist, in dem
   - orthogonal zu dessen Längsrichtung - eine Bohrung ausgespart ist, in welche das Sperrglied eintritt, wenn das Sperrglied die Riegel-Festhalte-Position einnimmt.

Typischerweise bildet die Stützkonstruktion über jedem Hinterrad eine paarweise, parallele und zueinander beabstandete Anordnung aus sich je in Fahrzeuglängsrichtung erstreckendem oberen äußeren Längsträger und oberen inneren Längsträger. In weiterer Ausgestaltung der vorstehend beschriebenen ersten Ausführungsform können am oberen inneren Längsträger zwei, zueinander beabstandete, vertikal abstehende und auf den oberen äußeren Längsträger zu gerichtete Montageplatten angeschweißt sein, an denen je ein Bohrung ausgespart ist, durch welche die Verriegelungsstange hindurchragt.

Mit Hilfe dieser Montageplatten ist die Verriegelungsstange sicher und stabil an der Stützkonstruktion verschiebbar gehalten und geführt. Das Sperrglied kann eindeutig und bestimmt in der Riegel-Festhalte-Position oder in der Riegel-Freigabe-Position angeordnet werden. Im Bereich der Fahrzeugrückwand können verschiedene Halteanschläge ausgebildet sein, an welche das Verriegelungsstangen-Griffstück angelegt und in dieser Stellung gesichert werden kann.

Nach einer weiteren vorteilhaften Ausgestaltung dieser ersten Ausführungsform der vorliegenden Erfindung kann vorzugsweise vorgesehen sein, dass
- der Verriegelungseinrichtung ein Riegel-Position-Sensor zugeordnet ist, der eine Anwesenheit oder Abwesenheit des Riegels in einer Verriegelungsstellung an/in der Verriegelungseinrichtung erfasst und bei Anwesenheit des Riegels ein Riegel-Anwesend-Signal sowie bei Abwesenheit des Riegels ein Riegel-Abwesend-Signal generiert und das jeweils generierte Signal an den Controller übermittelt;
- ferner der Verriegelungseinrichtung ein Sperrglied-Position-Sensor zugeordnet ist, der bei Anwesenheit des Sperrgliedes in der Riegel-Festhalte-Position ein Sperrglied-Anwesend-Signal generiert und an den Controller übermittelt; und
- der Controller auf eine Betätigung des Parkbremsschalters hin eine Deaktivierung eines aktivierten Parkbremsmodus nur dann veranlasst
   - - wenn am Controller gleichzeitig ein Riegel-Abwesend-Signal anliegt; oder
   -- wenn am Controller gleichzeitig ein Riegel-Anwesend-Signal und ein Sperrglied-Anwesend-Signal anliegt.

Mit dieser Ausgestaltung kann einfach und sicher eine Koppelung der Verriegelung eines am Fahrzeug wahlweise angebrachten Transportbehälters mit dem Parkbremsmodus der Hinterräder am Fahrzeug erreicht werden.

Vorzugsweise können diese Sensoren im Bereich der zur Fahrzeugrückwand entfernten inneren Montageplatte an der Stützkonstruktion oder an dieser inneren Montageplatte angebracht sein.

Es kann ein Schnellverschlusssystem bereitgestellt werden, das mit einer manuell betätigbaren Verriegelungseinrichtung ausgerüstet ist. Die von einer Bedienungsperson eingeleitete Trennung des Transportbehälters vom Fahrzeug wird in jedem Falle bei stillstehendem Fahrzeug vorgenommen, weil der Controller dann selbsttätig und automisch eine Aktivierung des Parkbremsmodus vornimmt, wenn die Bedienungsperson versäumt oder unterlassen hat, vor oder zur Entfernung des Transportbehälters vom Fahrzeug eine Initiierung des Parkbremsmodus vorzunehmen, und hierzu den Parkbremsschalter zu betätigen.

Sofern am Controller ein Riegel-Abwesend-Signal anliegt, wird der Controller keinen Parkbremsmodus aktivieren, und ein ansonsten aktivierter Parkbremsmodus kann mit den üblichen Mitteln deaktiviert werden, so dass das Fahrzeug auch dann mit eigenem motorischen Antrieb bewegt werden kann, wenn am Fahrzeug kein Transportbehälter montiert ist.

Nachstehend wird die oben angesprochene zweite Ausführungsform der vorliegenden Erfindung beschrieben, bei der eine elektrisch bewirkte Sperrgliedverstellung realisiert ist.

Ausgehend von einem dreirädrigen Elektrofahrzeug nach dem Dokument DE 10 2019 003 129 B3 mit den vorstehend genannten Merkmalen
**ist eine weitere vorteilhafte erfindungsgemäße Lösung obiger Aufgabe**
**dadurch gekennzeichnet, dass**
- jede Hinterrad-Scheibenbremsanlage zusätzlich mit einer integrierten, vom Controller kontrollierten, elektromechanischen Parkbremse ausgerüstet ist, deren Betätigung eine Drehung jedes Hinterrades verhindert, was einen Parkbremsmodus einstellt; und
- das Schnellverschlusssystem eine oder mehrere Verbindungseinrichtung(en) aufweist, wobei jede Verbindungseinrichtung
   -- einen Riegel hat, der von einer Bodenfläche am Transportbehälter nach außen absteht; und
   -- eine, an der Stützkonstruktion dauerhaft angebrachte Verriegelungseinrichtung hat, welche im Falle des auf der Stützkonstruktion abgestützten Transportbehälters dessen Riegel aufnimmt, und
      die einen, vom Controller gesteuerten Elektromotor und ein, mit Hilfe dieses Elektromotors verstellbares Sperrglied hat, das eine den Riegel festhaltende Position, nachstehend: Riegel-Festhalte-Position oder
      eine, vom Riegel entfernte Position, nachstehend: Riegel-Freigabe-Position einnehmen kann; und
- der Controller dafür sorgt, dass der Elektromotor das Sperrglied nur dann aus der Riegel-Festhalte-Position in die Riegel-Freigabe-Position verstellen kann, wenn sich jedes Hinterrad im Parkbremsmodus befindet.

Diese zweite Ausführungsform erfordert keinen direkten Zugriff einer Bedienungsperson, und es können ohne weiteres mehrere Verbindungseinrichtungen an vergleichsweise schwer zugänglichen Stellen am Fahrzeug vorgesehen werden.

Am Fahrzeug, beispielsweise am Fahrzeuglenker, und hier insbesondere am Fahrzeuglenker neben einem schwenkbaren Bremshandgriff, ist ein elektromechanischer Parkbremsschalter angebracht, den eine Bedienungsperson in eine Parkbremsmodus-Ein-Stellung oder in eine Parkbremsmodus-Aus-Stellung verstellen kann. Ein solcher Schalterstellungswechsel wird dem Controller als Parkbremssignal zugeleitet, der daraufhin über eine Parkbremssteuereinheit an/in im Bremssattel jeder Hinterrad-Scheibenbremsanlage deren Parkbremsmotor aktiviert, um so beide Hinterräder am erfindungsgemäßen Fahrzeug in den Parkbremsmodus zu versetzen. Im aktivierten Parkbremsmodus ist eine Drehung jedes Hinterrades verhindert; das Fahrzeug steht still; am stillstehenden Fahrzeug kann der Transportbehälter gefahrlos mit Hilfe einer externer Hubeinrichtung, etwa mit einem handbetätigten Gabelstapler, angehoben, vom Fahrzeug getrennt und gegen einen anderen Transportbehälter ausgetauscht werden.

In der Parkbremsschalter-Ein-Stellung ist der Parkbremsmodus der Hinterräder aktiviert, und in der Parkbremsschalter-Aus-Stellung ist kein Parkbremsmodus aktiviert, bzw. ein vorher aktivierter Parkbremsmodus deaktiviert. Weil nur die Bedienungsperson einen solchen Wechsel der aktuellen Parkbremsschalter-Stellung durchführen kann, ist gewährleistet, dass die Bedienungsperson beim Deaktivieren eines vorher aktivierten Parkbremsmodus am Fahrzeug anwesend ist und tätig werden muss; das Fahrzeug kann nicht unbeaufsichtigt wegrollen, weil ein vorher aktivierter Parkbremsmodus unbeabsichtigt (etwa wegen einer Fehlfunktion des Controllers) deaktiviert worden ist.

Nach einer weiteren vorteilhaften Ausgestaltung ist am Fahrzeug, beispielsweise am Fahrzeuglenker, und hier insbesondere am Fahrzeuglenker neben einem Beschleunigungsdrehgriff ein elektromechanischer Verriegelungsschalter angebracht, den eine Bedienungsperson in eine Verriegelung-Ein-Stellung oder in eine Verriegelung-Aus-Stellung verstellen kann. Ein solcher Schalterstellungswechsel wird dem Controller als Verriegelungszustand-Veränderungssignal zugeleitet, der daraufhin den Verriegelungseinrichtung-Elektromotor so ansteuert, dass dieser in der Verriegelung-Ein-Stellung das Sperrglied aus der Riegel-Freigabe-Stellung in die Riegel-Festhalte-Stellung verstellt; alternativ und entsprechend wird in der Verriegelung-Aus-Stellung das Sperrglied aus der Riegel-Festhalte-Stellung in die Riegel-Freigabe-Stellung verstellt.

Hierbei ist wichtig und wesentlich, dass die, die Sperrgliedverstellung kontrollierende und steuernde Untereinheit im Controller das eintreffende Verriegelung-Aus-Signal nur dann nutzt und in eine Aktivierung des Verriegelungseinrichtung-Elektromotors umsetzt, wenn am Controller bereits ein Parkbremsmodus-Ein-Signal anliegt, und der Parkbremsmodus tatsächlich aktiviert ist. Sofern der Parkbremsmodus deaktiviert ist, bleibt das von der Bedienungsperson durch Betätigung des Verriegelungsschalters ausgelöste Verriegelung-Aus-Signal wirkungslos. Die Bedienungsperson muss zuerst den Parkbremsschalter in die Parkbremsmodus-Ein-Stellung verstellen, und dann erneut den Verriegelungsschalter in die Verriegelung-Aus-Stellung bringen, damit eine Verstellung des Sperrgliedes aus der Riegel-Festhalte-Stellung in die Riegel-Freigabe-Stellung erreicht wird; in dieser Riegel-Freigabe-Stellung kann der Transportbehälter von der Stützkonstruktion gelöst und vom Fahrzeug entfernt werden.

Mit dieser gemeinsamen und gekoppelten Wirkung von Parkbremsschalter und Verriegelungsschalter ist gewährleistet, dass der Transportbehälter nur dann vom Fahrzeug entfernt werden kann, wenn sich beide Fahrzeughinterräder im Parkbremsmodus befinden und folglich nicht drehen können; das Fahrzeug steht still.

Das erfindungsgemäße Elektrofahrzeug hat eine Karosserie, die im hinteren Fahrzeugbereich über der Stützkonstruktion Raum und Platz für eine virtuelle ebene Ladefläche bereitstellt. Diese Ladefläche erstreckt sich parallel und in einem Abstand von etwa 35 cm bis 40 cm über einer, von den drei Radachsen definierten Radachsenebene und wird begrenzt von einem hinteren Fahrzeugende, von beiden Fahrzeugseitenfronten und von einer Überrollbügelanordnung hinter einem Fahrersitz. Bei einer regulären Ausführungsform des erfindungsgemäßen Elektrofahrzeugs hat diese Ladefläche - in Richtung der Fahrzeuglänge - eine Länge von etwa 75 cm und eine dazu orthogonale Breite von etwa 120 cm; bei einer Langversion des erfindungsgemäßen Elektrofahrzeugs hat diese Ladefläche - bei gleicher Breite - eine Länge von etwa 100 cm.

"etwa" beschreibt hier und an anderen ähnlichen Stellen dieser Unterlagen einen Bereich, der von minus 3 % bis zu plus 3 % des angegebenen Zahlenwertes reicht; folglich kann im vorliegenden Falle eine Breite von etwa 120 cm tatsächlich Werte von 116,4 cm bis 123,6 cm haben.

Unterhalb dieser virtuellen Ladefläche und über jedem Hinterrad befindet sich die Stützkonstruktion, an der ein Transportbehälter abgestützt und festgehalten werden kann. Nach einer weiteren vorteilhaften Ausgestaltung weist diese Stützkonstruktion über jedem Hinterrad eine paarweise, parallele und zueinander beabstandete Anordnung aus sich je in Fahrzeuglängsrichtung erstreckendem oberen äußeren Längsträger und oberen inneren Längsträger auf, wobei am oberen inneren Längsträger eine vertikal abstehende und auf den oberen äußeren Längsträger zu gerichtete Montageplatte angeschweißt ist, an welcher die Verriegelungseinrichtung dauerhaft angebracht ist.

Typischerweise bildet hier jeder Längsträger einen Abschnitt eines rohrförmigen, aus metallischem Material bestehenden Skelettelementes der Fahrzeugkarosserie.

Am erfindungsgemäßen Elektrofahrzeug hat Bauart bedingt, jede, aus Radnabenmotor, daran befestigtem Hinterradreifen und damit gekoppelter Hinterrad-Scheibenbremsanlage bestehende Hinterradbaueinheit nur eine relativ geringe Breite, die etwa 1/3 der Fahrzeugbreite ausmacht. Zwischen den beiden, beabstandet zueinander angeordneten Hinterradbaueinheiten besteht ein freier Raum, der für Transportzwecke genutzt wird. In diesen freien Raum kann ein dauerhaft vorhandener Zusatzbehälter eingesetzt sein, der dauerhaft an der Karosserie befestigt ist.

Alternativ kann in diesen freien Raum ein Zusatzbehälter eintauchen, der am Boden des auf der Ladefläche abstützbaren (eigentlichen) Transportbehälters angesetzt ist und mit diesem ein gemeinsames Innenvolumen für Transportzwecke bildet. Der eigentliche Transportbehälter bildet typischerweise einen quaderförmigen Kasten, der mit Kastenlängsrichtung in Fahrzeugbreitenrichtung am Fahrzeug angeordnet wird. Der ebenfalls quaderförmige, aber kleinere Zusatzbehälter wird an der Transportbehälterbodenwand mittig und mit der Zusatzbehälterlängsrichtung orthogonal zur Transportbehälterlängsrichtung angesetzt, so dass ein, aus eigentlichem Transportbehälter und Zusatzbehälter bestehender gemeinsamer Transportbehälter erhalten wird. Dieser gemeinsame Transportbehälter hat in Richtung der Fahrzeugbreite einen im Wesentlichen T-förmigen Querschnitt, wobei der eigentliche Transportbehälter den T-Balken, und der Zusatzbehälter den T-Stamm bildet. Angrenzend an beide Zusatzbehälterseitenfronten weist der gemeinsame Transportbehälter je einen Bodenwandabschnitt auf, von dem der oder die Riegel der erfindungsgemäß vorgesehenen Verbindungseinrichtung(en) vertikal abstehen. Nachstehend werden die Bodenwand des eigentlichen Transportbehälters und diese beiden Bodenwandabschnitte des gemeinsamen Transportbehälters als "Bodenwand" bezeichnet.

Nach einer weiteren vorteilhaften Ausgestaltung der vorliegenden Erfindung ist vorzugsweise vorgesehen, dass an beiden oberen inneren Längsträgern der oben beschriebenen Stützkonstruktion je zwei, in Fahrzeuglängsrichtung zueinander beabstandete Montageplatten angeschweißt sind, und an jeder Montageplatte je eine Verriegelungseinrichtung dauerhaft angebracht ist, so dass am erfindungsgemäßen Elektrofahrzeug insgesamt vier Verbindungseinrichtungen angebracht sind; korrespondierend stehen von der Bodenwand des eigentlichen oder des gemeinsamen Transportbehälters vier Riegel ab; solche Riegel haben typischerweise eine Länge von etwa 4 bis 8 cm. Für solche Riegel können verschiedene Ausführungsformen vorgesehen werden.

Hier ist nach einer bevorzugten Ausführungsform vorgesehen, dass ein solcher Riegel ein gerades, längliches, relativ breites, typischerweise aus rostfreiem Eisenmaterial bestehendes Vierkantstück aufweist, in dem - orthogonal zu dessen Längsrichtung - eine Bohrung ausgespart ist, in welche das Sperrglied eintritt, wenn das Sperrglied die Riegel-Festhalte-Position einnimmt.

Vorzugsweise kann das Vierkantstück einen Schenkel eines 90°Grad-Winkelstückes bilden, das einen weiteren Schenkel hat, der - parallel zur Transportbehälterbodenwand ausgerichtet - an der Transportbehälterbodenwand befestigt ist.

Mit solchen Riegeln kann der auf der Ladefläche angeordnete auswechselbare Transportbehälter einfach, stabil und gezielt lösbar an der Stützkonstruktion festgehalten werden.

Nach einer alternativen bevorzugten Ausführungsform ist vorgesehen, dass der Riegel einen geraden länglichen runden Zapfen bildet,
- der einstückig an einer Befestigungsplatte angeformt ist, die an einer Unterseite der Transportbehälterbodenwand anbringbar ist;
- der einen Zapfenmantel hat, in dem eine umlaufende Zapfennut ausgespart ist; und die Verriegelungseinrichtung einen Schlosskörper aufweist,
- der eine Aufnahmebohrung hat, in welche der zapfenförmige Riegel eintreten kann;
- der ferner eine, zur Aufnahmebohrung orthogonal ausgerichtete und die Aufnahmebohrung teilweise schneidende Sperrbohrung hat, in welche das Sperrglied eintreten kann und darin verschiebbar geführt ist; und
sofern der Transportbehälter auf der Ladefläche angeordnet und an der Stützkonstruktion angelenkt ist,
in der Riegel-Festhalte-Position
- der Riegel in die Aufnahmebohrung eingeführt ist;
- das Sperrglied in die Sperrbohrung eingeführt ist; und
- ein Sperrgliedabschnitt einen gemeinsamen Volumenabschnitt in der Aufnahmebohrung in der Zapfennut und in der Sperrbohrung besetzt und damit den Riegel formschlüssig in dem Schlosskörper festhält.

Wie oben bereits ausgeführt, ist vorzugsweise am oberen inneren Längsträger der Stützkonstruktion eine vertikal abstehende und auf den oberen äußeren Längsträger zu gerichtete Montageplatte angeschweißt ist. Nach einer weiteren vorteilhaften Ausgestaltung der vorliegenden Erfindung, ist an dieser Montageplatte der Schlosskörper dauerhaft so angebracht, dass dessen Aufnahmebohrung vertikal, also orthogonal zur Ladeflächenebene ausgerichtet ist.

Die Verriegelungseinrichtung ist stabil, dauerhaft und platzsparend an der Fahrzeugkarosserie befestigt. Der Schlosskörper schafft eine Führung für den Riegel; auch mit vergleichsweise geringen Abmessungen von Riegel und Schlosskörper wird eine stabile und sichere Verbindung zwischen dem auf der Stützkonstruktion abgestützten Transportbehälter und der Fahrzeugkarosserie erhalten.

Nach einer weiteren vorteilhaften Ausgestaltung der vorliegenden Erfindung ist vorzugsweise vorgesehen, dass ein zur Verriegelungseinrichtung gehörender erster Elektromotor eine Spindel treibt, welche eine Vorschubmutter verstellt, die drehfest mit dem Sperrglied gekoppelt ist, das seinerseits drehfest gegenüber dem Schlosskörper gehalten und geführt ist.

Hierzu ist ein Spindelteil mit einem Außengewinde versehen, das in eine, mit dem Sperrglied drehfest gekoppelte Vorschubmutter eingreift. Je nach Drehrichtung der Spindel wird die Vorschubmutter und das damit gekoppelte Sperrglied auf den Schlosskörper zu oder von diesem weg bewegt. Eine auf das Schlossglied zu gerichtete Bewegung verstellt das Sperrglied in die Riegel-Festhalte-Position, und eine von dem Schlosskörper weg gerichtete Bewegung verstellt das Sperrglied aus der Riegel-Festhalte-Position in die Riegel-Freigabe-Position. Der Elektromotor kann vorzugsweise ein Schrittmotor sein, der nach Vorgabe des Controllers die für den Verstellweg des Sperrgliedes erforderliche Anzahl Spindelumdrehungen ausführt.

Nach einer alternativen Ausgestaltung ist zur Sperrgliedverstellung vorgesehen, dass ein zur Verriegelungseinrichtung gehörender alternativer Elektromotor einen Hebel verschwenkt, der über ein Verbindungsstück gelenkig mit dem Sperrglied gekoppelt ist.

In diesem Falle hat es sich als zweckmäßig erwiesen, wenn der zur Verriegelungseinrichtung gehörende alternative Elektromotor ein quaderförmiges Gehäuse hat, das in einer passenden rechteckigen Aussparung sitzt, die in einem Schenkel eines Winkelstückes ausgespart ist, das einen weiteren Schenkel hat, der an einer zur Montageplatte gegenüber befindlichen Seitenwandfläche des Schlosskörper anliegt und an dieser befestigt ist.

Der Schlosskörper ist über die Montageplatte stabil am oberen inneren Längsträger der Stützkonstruktion befestigt, die Elektromotorhalterung ist stabil an dem Schlosskörper befestigt, und der stabil innerhalt der Elektromotorhalterung gehaltene alternative Elektromotor nimmt einen bestimmten vorgegebenen gleichbleibenden Abstand zum Schlossköper und zu Aufnahmebohrung innerhalb des Schlosskörpers ein. Das Sperrglied bewegt sich in einer Richtung, die parallel zur Richtung der Transportbehälterbodenwand und senkrecht zur Zapfenrichtung ausgerichtet ist. Aufgrund dieser Gegebenheiten kann das vom alternativen Elektromotor verstellte Sperrglied innerhalb des Schlosskörpers sicher eine bestimmte, die Aufnahmebohrung teilweise sperrende Anordnung einnehmen und den innerhalb der Aufnahmebohrung befindlichen zapfenförmigen Riegel mittels Formschluss bestimmt, sicher und definiert festhalten.

Nach einer weiteren bevorzugten Ausführungsform ist vorgesehen, dass die Verriegelungseinrichtung mit einem Riegel-Position-Sensor versehen ist, welcher die Anwesenheit oder die Abwesenheit des Riegels in der Riegel-Festhalte-Position innerhalb der Aufnahmebohrung des Schlosskörpers feststellt und ein entsprechendes Riegel-Position-Signal an den Controller übermittelt.

Vorzugsweise wird zu allen vier von der Transportbehälterbodenwand abstehenden Riegeln je so ein übereinstimmendes Riegel-Position-Signal festgestellt und an den Controller übermittelt, damit der Controller eindeutig feststellen kann, ob sich ein Transportbehälter am Fahrzeug befindet oder nicht. Befindet sich kein Transportbehälter am Fahrzeug, dann kann der Parkbremsmodus auch dann deaktiviert und das Fahrzeug in Bewegung gesetzt werden, wenn sich jedes Sperrglied nicht in der Riegel-Festhalte-Position befindet. Hat/haben jedoch der/die Riegel-Position-Sensor(en) die Anwesenheit des Transportbehälters am Fahrzeug bestätigt, dann kann ein bestehender Parkbremsmodus nur dann deaktiviert und das Fahrzeug in Bewegung gesetzt werden, wenn jedes Sperrglied seine Riegel-Festhalte-Position einnimmt. Dies kann von je einem Sperrglied-Position-Sensor geprüft und gemeldet werden.

Nach einer weiteren vorteilhaften und bevorzugten Ausführungsform ist vorgesehen, dass die Verriegelungseinrichtung zusätzlich mit einem Sperrglied-Position-Sensor versehen ist, welcher die Anwesenheit oder die Abwesenheit des Sperrgliedes in der Riegel-Festhalte-Position ermittelt und ein entsprechendes Sperrglied-Position-Signal an den Controller übermittelt.

Die Anwesenheit aller Sperrglieder in der jeweiligen Riegel-Festhalte-Position, und damit die Anwesenheit des Transportbehälters und dessen ordnungsgemäße Befestigung am Fahrzeug, kann tatsächlich überprüft und in Echtzeit bestätigt werden; das schafft mehr Sicherheit, als hier nur auf die im Controller gegebene Datenlage zur Übermittlung von Befehlen an den Verriegelungseinrichtung-Elektromotor zurück zugreifen. Es kann vorgesehen werden, ein positives Sperrglied-Position-Signal auch auf einem am Fahrzeug vorhandenen Display anzuzeigen.

Jedes der drei Fahrzeugräder ist mit einer eigenen, hydraulisch betätigbaren Scheibenbremsanlage ausgerüstet; am Fahrzeuglenker befindet sich ein, mit Hydraulikflüssigkeit gefüllter Behälter, an den eine Kolben/Zylinder-Anordnung angeschlossen ist, die wiederum über Hydraulikmittelleitungen mit den den verschiedenen Scheibenbremsanlagen verbunden ist. Das Vorderrad ist mit einer nur hydraulisch betätigbaren Scheibenbremsanlage ausgerüstet. An den beiden Hinterrädern ist je eine Hinterrad-Scheibenbremsanlage angebracht, die zusätzlich mit der oben beschriebenen elektromechanischen Parkbremse ausgerüstet ist.

Für diese Hinterräder ist ein dreistufiges Bremsregime vorgesehen. Ein Anziehen des am Fahrzeuglenker angebrachten Bremshandgriffes verstellt zuerst einen gelenkig am Handgriffkörper angebrachten Stößel, der auf einen elektromechanischen Bremsschalter einwirkt, der daraufhin ein elektrisches Bremssignal erzeugt, das dem Controller zugeführt wird, der daraufhin die Motorsteuerungen der beiden Radnabenmotoren veranlasst, jeden Motor in einen Rekuperationsmodus zu steuern. Die Fahrzeuggeschwindigkeit wird mit Hilfe einer Motorbremsung reduziert. Bei einem weiteren Anziehen des Bremshandgriffes drückt der Stößel auf den Kolben der Kolben/Zylinder-Anordnung, was den Hydraulikmitteldruck im Zylinder erhöht; der erhöhte Hydraulikmitteldruck wird über Hydraulikmittelleitungen den Bremszylindern zugeführt, und der damit beaufschlagte und verstellte Bremskolben wird die Bremsbacken an die Bremsscheibe anpressen; es wird zusätzliche Bremskraft und Bremswirkung durch Betätigung der, an allen drei Fahrzeugrädern angebrachten Scheibenbremsen erhalten. Schließlich kann der Controller, nach entsprechender Betätigung des Parkbremsschalters durch die Bedienungsperson und Prüfung der aktuellen Fahrzeuggeschwindigkeit, bei einer Fahrzeuggeschwindigkeit gleich/kleiner 2 km/h, die elektromechanischen Parkbremsen aktivieren, um beide Hinterräder in einen Parkmodus zu versetzen, in dem eine Drehung der Hinterräder verhindert ist.

### DETAILLIERTE BESCHREIBUNG

Nachstehend wird das erfindungsgemäße Fahrzeug mehr im Einzelnen anhand einer bevorzugten Ausführungsform mit Bezugnahme auf Zeichnungen beschrieben; die letzteren zeigen:
- Fig. 1A: anhand eines Schrägbildes einen Blick von vorne auf Vorderfront und Seite eines erfindungsgemäßen Fahrzeugs;
- Fig. 1B: eine Seitenansicht des Fahrzeugs;
- Fig. 1C: anhand eines Schrägbildes einen Blick von hinten auf Heck und Seite des Fahrzeugs;
- Fig. 2A: schematisch verschiedene Bestandteile des Fahrzeugs;
- Fig. 2B: anhand eines Schrägbildes einen Blick auf die beiden, voneinander beabstandeten Hinterradbaueinheiten;
- Fig. 3A: eine Seitenansicht des von der Verkleidung befreiten Fahrzeugs;
- Fig. 3B: ein Blick von oben auf das Fahrzeug nach Fig. 3A;
- Fig. 3C: ein Blick von hinten auf das Heck des Fahrzeugs nach Fig. 3A;
- Fig. 4A: eine Seitenansicht eines erfindungsgemäß eingesetzten Radnabenmotors;
- Fig. 4B: eine an dem Radnabenmotor nach Fig. 4A zu befestigende Felge mit Radreifen;
- Fig. 5A: einen Transportbehälter;
- Fig. 5B: einen Zusatzbehälter;
- Fig. 6A: die Komponenten einer Verriegelungseinrichtung;
- Fig. 6B: einen alternativen Riegel;
- Fig. 6C: die zusammengebaute Verriegelungseinrichtung;
- Fig. 7A, 7B und 7C: teilweise weggebrochene Schnittdarstellungen eines Schlosskörpers zur Erläuterung einer Riegel-Festhalte-Position;
- Fig. 8A: die mit einem alternativen Elektromotor erzielbare Riegel-Festhalte-Position;
- Fig. 8B: die mit dem alternativen Elektromotor erzielbare Riegel-Freigabe-Position;
- Fig. 9A und 9B: eine Annäherung bzw. ein Aufsetzen des Transportbehälters an/auf einer virtuellen Ladefläche am Fahrzeug;
- Fig. 10A: anhand eines Schrägbildes einen rechten Abschnitt eines Fahrzeuglenkers mit Beschleunigungsdrehgriff und verschiedenen elektromechanischen Schaltern; und
- Fig. 10B: anhand eines Schrägbildes einen linken Abschnitt des Fahrzeuglenkers mit Bremshandgriff, hydraulischer Kolben/Zylinder-Anordnung und verschiedenen elektromechanischen Schaltern.

Die nachstehende Beschreibung des Fahrzeugs und seiner Komponenten verwendet Orts- und Richtungsangaben. Hierbei wird von einem, auf einem ebenen, horizontal ausgerichteten Untergrund stehenden oder fahrenden Fahrzeug ausgegangen. Dann definieren die Achsen der drei Fahrzeugräder eine Ebene, die parallel zu diesem Untergrund ausgerichtet ist. Auf dieser Ebene wird ein kartesisches Koordinatensystem errichtet, dessen X-Richtung in dieser Ebene in Fahrtrichtung ausgerichtet ist; die Fahrzeug-Längsrichtung erstreckt sich in dieser X-Richtung; entsprechend ist die Y-Richtung in dieser Ebene quer oder senkrecht zur Fahrtrichtung ausgerichtet und bezeichnet eine Seiten- bzw. Breitenrichtung; die Z-Richtung erstreckt sich senkrecht zu dieser Ebene und bezeichnet eine Hoch- oder Höhenrichtung. Folglich bedeutet "unten" oder "untere" in Z-Richtung näher oder benachbart zum Untergrund; "oben" oder "obere" bedeutet in Z-Richtung ferner oder entfernt(er) zum Untergrund; "vorne", "vordere" oder "vorwärts" zielt in X-Richtung auf die Fahrzeugfront; "hinten", "hintere" oder "rückwärts" zielt in der X-Richtung auf das Fahrzeugheck.

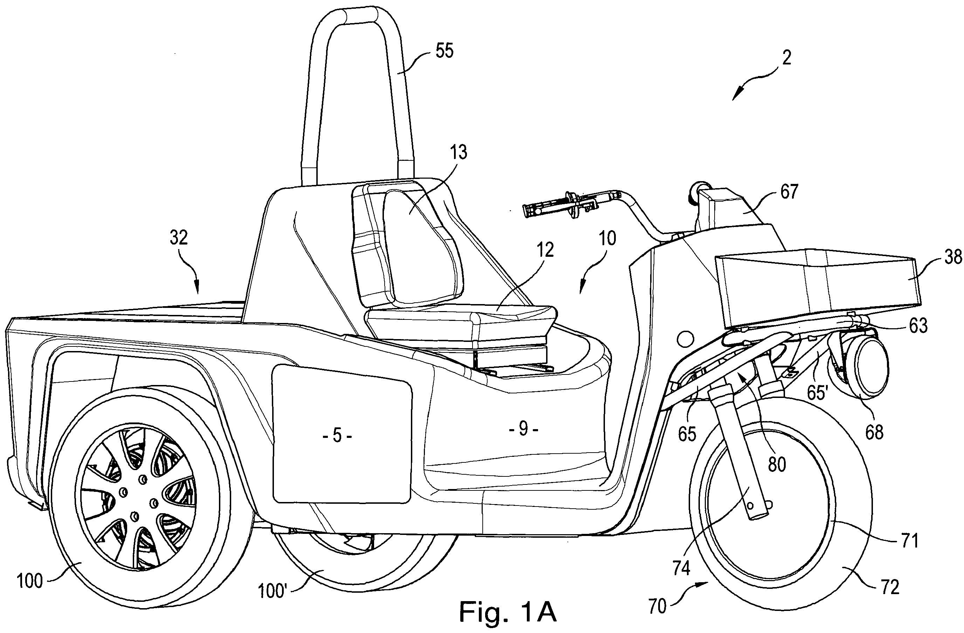

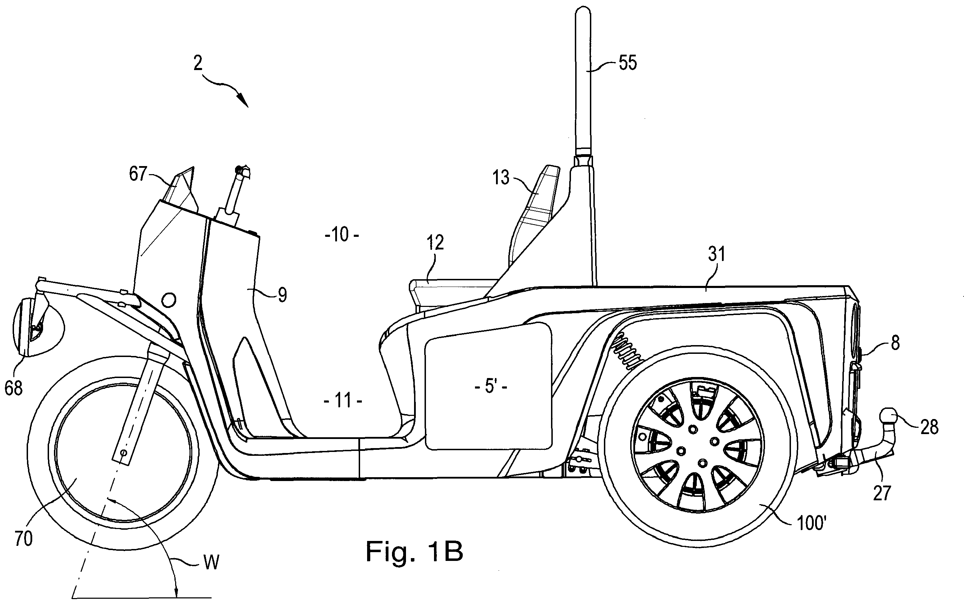

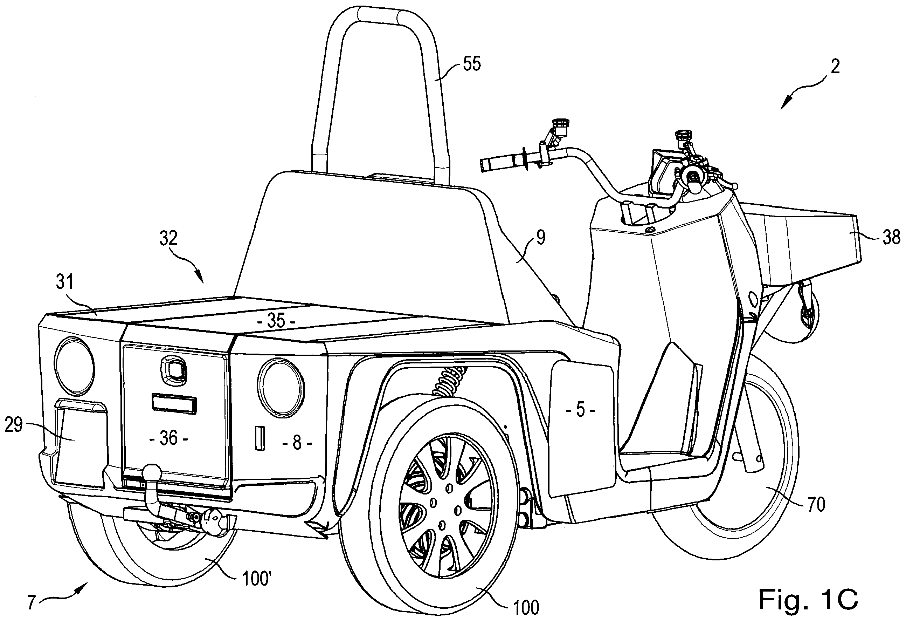

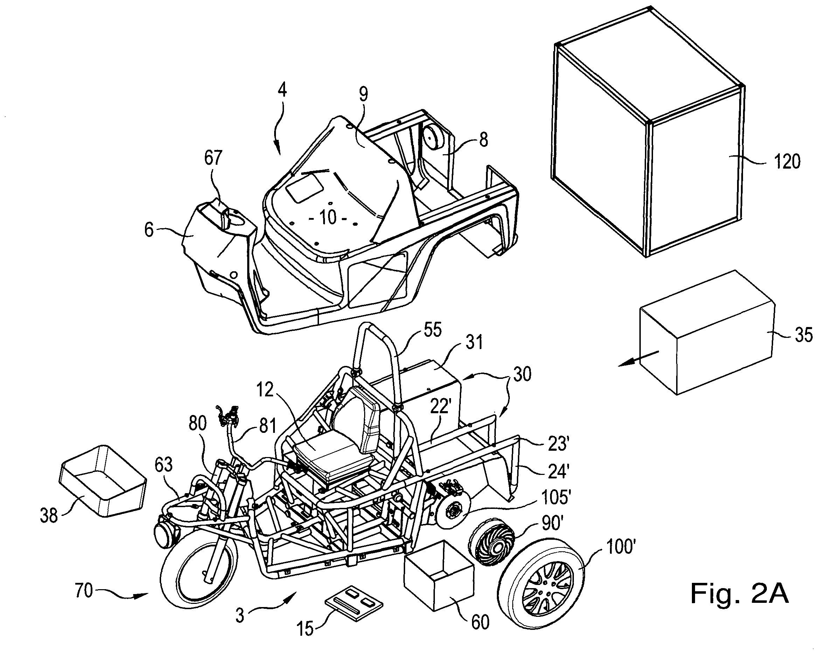

Die Fig. 1A, 1B und 1C vermitteln ein Bild vom optischen Eindruck eines erfindungsgemäßen Fahrzeugs 2, dessen wesentliche Bestandteile mit Fig. 2A angedeutet sind. Das Fahrzeug 2 ist ein dreirädriges Fahrzeug mit einem lenkbaren Vorderrad 70 und zwei elektromotorisch angetriebenen Hinterrädern 100 und 100'. Das Fahrzeug 2 hat einen Fahrzeugaufbau mit einer Karosserie 3, an der eine Fahrzeugverkleidung 4 aufgehängt ist. Ferner gehört zum Fahrzeugaufbau ein Fahrgestell mit den Radaufhängungen für die beiden Hinterräder 100 und 100'. Schließlich umfasst der Fahrzeugaufbau eine, schwenkbar an der Karosserie 3 angebrachte Teleskopfedergabel 80, an der ein Fahrzeuglenker 81 befestigt ist, mit dem das Vorderrad 70 lenkbar ist.

An der Karosserie 3 ist ein Fahrersitz 12 für einen Fahrzeugfahrer angebracht. Die Elektromotoren des Fahrzeugs werden mit elektrischer Energie aus einer Batterie 60 versorgt, die in einem Abteil 59 unterhalb des Fahrersitzes 12 untergebracht ist.

Am Fahrzeug 2 gibt es eine Platine, auf der sich ein Mikrokontroller mit Mikroprozessor, sowie übliche elektronische Bauteile und Komponenten befinden, mit denen Datenspeicherkapazität und digitale Datenverarbeitungskapazität bereitgestellt wird; diese gesamte Einrichtung wird nachstehend als "Controller 15" bezeichnet. Der Controller 15 kann in einem Fach unterhalb der Batterien 60 untergebracht sein.

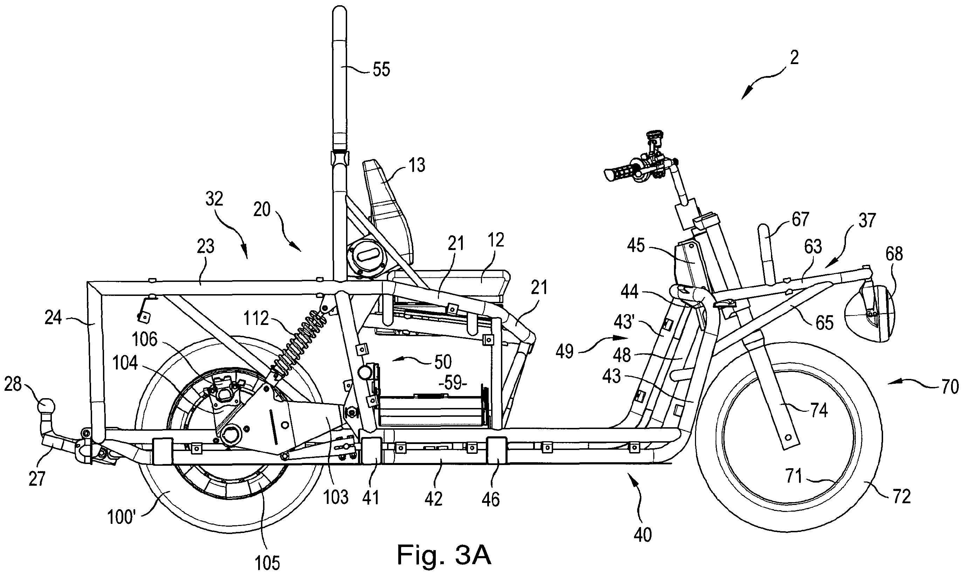

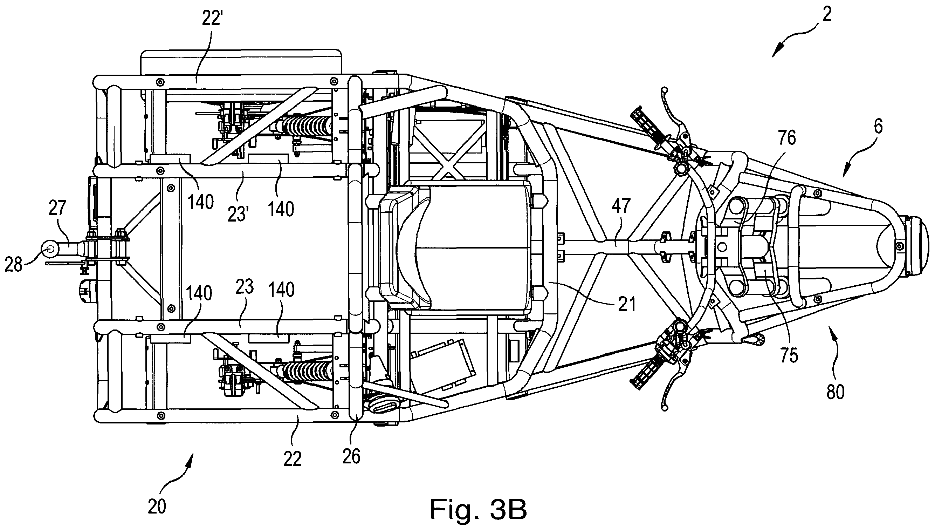

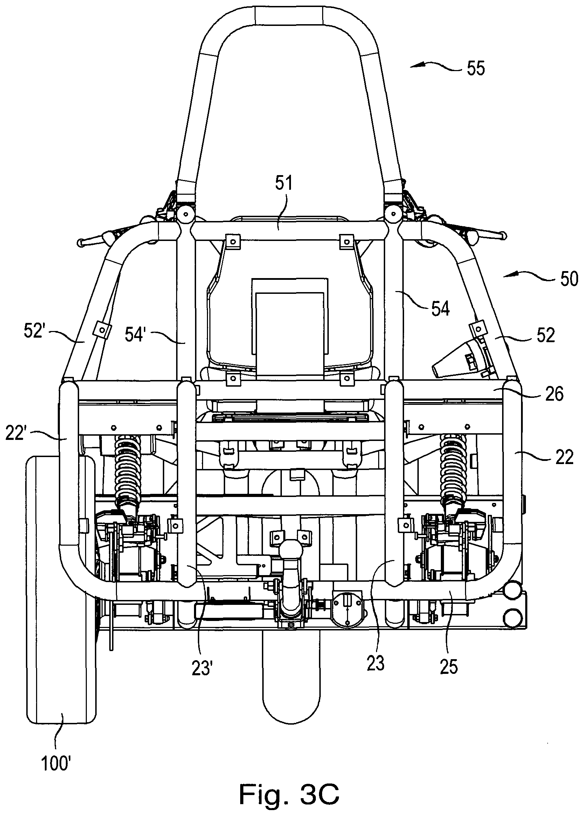

Mit Bezugnahme auf die Fig. 3A, 3B und 3C wird nachstehend die Karosserie 3 des Fahrzeugs 2 im Einzelnen erläutert. Die Karosserie 3 ist in Skelettkarosserie-Bauweise ausgeführt und hat ein Skelett, dessen wesentliche Elemente aus einem metallischen Werkstoff bestehen, wie er typischerweise im Fahrzeugbau eingesetzt wird. Zu typischen Werkstoffen gehören hier Eisen und Stahl, sowie Leichtmetalllegierungen auf der Basis von Aluminium oder Magnesium. Zu wesentlichen Elementen gehören Rohre, Stäbe und Profile, die direkt oder über Knoten miteinander verbunden sind; im Falle einer Direktverbindung sind solche Elemente typischerweise miteinander verschweißt. Rohre aus Eisen und Stahl haben typischerweise einen Durchmesser von 40 mm und eine Wandstärke von 2 mm; Rohre aus einem Aluminiumwerkstoff haben typischerweise einen Durchmesser von 40 mm und eine Wandstärke von 6 mm. Die Karosserie 3 hat drei wesentliche Bestandteile, nämlich ein oberes Tragelement 20, ein unteres Tragelement 40, und einen vertikalen Stützrahmen 50.

Das obere Tragelement 20 bildet einen geschlossenen, aus Rohren und Rohrabschnitten bestehenden Rahmen, mit einem, vor der Fahrzeugmitte angeordneten, sich horizontal in Querrichtung erstreckenden, aus geraden-Rohrabschnitten gebildeten, U-förmig gekrümmten oberen Querholm 21, an dessen Enden je ein sich horizontal nach hinten erstreckender, oberer äußerer Längsträger 22 und 22' angesetzt ist, an deren Hinterenden je ein vertikal abfallendes Rohr 24 bzw. 24' angesetzt ist, deren Enden über einen, unteren, horizontal ausgerichteten Querträger 25 miteinander verbunden sind. Dieser untere Querträger 25 markiert die Unterkante einer vertikalen Fahrzeugrückwand 8. An diesem unteren Querträger 25 kann wahlweise ein abstehender Hals 27 einer Kugelkopfkupplung 28 angebracht sein.

An die beiden oberen äußeren Längsträger 22 und 22' sind die beiden Enden eines vorderen oberen Querträgers 26 angeschweißt, an dem wiederum obere innere Längsträger 23 und 23' angeschweißt sind. Obere äußere Längsträger 22 und 22' sowie obere innere Längsträger 23 und 23' bilden einerseits zusammen eine Basis für eine ebene, horizontal ausgerichtete, über den Hinterrädern befindliche, virtuelle, hintere Ladefläche 32 hat, die sich über die gesamte Fahrzeugbreite erstreckt. Andererseits bilden die beiden Anordnungen aus je oberen äußeren und inneren Längsträgern 23 und 22 sowie oberen äußeren und inneren Längsträgern 23' und 22' eine Stützkonstruktion 30, an/auf der ein nachstehend beschriebener auswechselbarer Transportbehälter 120 bzw. 130 eine Zeit lang abgestützt und festgehalten werden kann. Typischerweise ist jede dieser Anordnungen und das darunter befindliche Hinterrad 100 bzw. 100' mit bzw. innerhalb einer Abdeckung 31 eingehaust. In Fig. 3B sind an jedem oberen inneren Längsträger 23, 23' - nicht maßstäblich - je zwei, erfindungsgemäß vorgesehene Verriegelungseinrichtungen 140 angedeutet, mit deren Hilfe ein solcher, auswechselbarer Transportbehälter 120, bzw. 130 eine Zeit lang am Fahrzeug 2 festgehalten werden kann.

Ein typisches erfindungsgemäßes Fahrzeug 2 hat eine Breite von 120 cm, und die Länge der virtuellen Ladefläche 32 kann etwa 74 cm betragen, so dass eine virtuelle hintere Ladefläche 32 eine rechteckige Fläche von etwa 8880 cm² erreicht.

Eine Langversion des erfindungsgemäßen Fahrzeugs hat
- eine Gesamt-Fahrzeuglänge von 275 cm; und
- eine Länge der hinteren Ladefläche 32 von etwa 102 cm;
damit ist diejenige gesetzliche Anforderung an ein L2e-U Fahrzeug erfüllt, dass dessen minimale Länge der (Haupt)Ladefläche größer/gleich 1/3 der Fahrzeuglänge sein muss.

Typischerweise befindet sich diese virtuelle Ladefläche 32 in einem Abstand von etwa 75 cm über der Fahrbahn.

Das untere Tragelement 40 bildet einen geschlossenen Rahmen mit einem hinter der Fahrzeugmitte und vor den beiden Hinterrädern 100 und 100' angeordneten, sich horizontal in Querrichtung über die gesamte Fahrzeugbreite erstreckenden, unteren hinteren Querträger 41, an dessen Enden je ein unterer, horizontal ausgerichteter, äußerer Doppelrohr-Längsträger 42 und 42' angesetzt ist, die beide nach vorne aufeinander zu laufen. Die Karosseriefront 6 hat eine verminderte Breite von etwa der halben Fahrzeugbreite, und hier bilden die beiden äußeren unteren Längsträger 42 und 42' je einen ansteigenden, einrohrigen Pfeiler 43 und 43' einer nach rückwärts gewölbten Brücke 44. An deren Brückenwölbung ist ein, sich nach vorne erstreckender massiver Block 45 angesetzt und befestigt. Zusätzlich hat das untere Tragelement 40 einen, sich etwa in Fahrzeugmitte befindlichen und in Querrichtung erstreckenden unteren mittigen Querträger 46, dessen Enden mit je einem Rohr der unteren äußeren Längsträger 42 und 42' verschweißt ist; unterer hinterer Querträger 41 und unterer mittiger Querträger 46 sind je als hohles Vierkantprofil ausgeführt. In der Mitte des mittigen Querträgers 46 ist ein weiterer, sich in Fahrzeuglängsrichtung horizontal nach vorne erstreckender unterer mittiger Längsträger 47 angesetzt, der einen ansteigenden vorderen Endabschnitt 48 hat, der ebenfalls am Block 45 endet und mit diesem verschweißt ist. Die beiden ansteigenden Brückenpfeiler 43 und 43' und der mittig dazwischen sich in gleicher Richtung erstreckende Vorderendabschnitt 48 des mittigen unteren Längsträgers 47 bilden gemeinsam eine nach vorne schützende Barriere 49 für einen Fußraum 11 eines Fahrzeugfahrers am Fahrzeug 2.

An dem Block 45 ist schwenkbar eine Teleskopfedergabel 80 angebracht, an der drehbar ein nicht motorisch angetriebenes Vorderrad 70 gehalten ist. Wie aus Fig. 3B ersichtlich ist, hat die Teleskopfedergabel 80 in üblicher Bauweise zwei parallele obere Standrohre, die von einer unteren Gabelbrücke 75 und einer oberen Gabelbrücke 76 zusammengehalten werden; zwischen die beiden Gabelbrücken 75 und 76 ist mittig ein Gabelschaft eingesetzt ist, der schwenkbar in einem Gabelschaftrohr geführt ist, das seinerseits an der Vorderkante des massiven Blocks 55 angeschweißt ist. Über diese Kombination aus Gabelschaft und Gabelschaftrohr ist die Teleskopfedergabel 80 schwenkbar an der Fahrzeugkarosserie 3 gehalten. An der oberen Gabelbrücke 76 ist ein gekröpft ausgeführter Fahrzeuglenker 81 drehfest befestigt. Die gesamte Teleskopfedergabel 80 ist schräg nach vorne gestellt, und die Ausrichtung des Gabelschaftes definiert die Richtung einer Lenkachse, die mit einer Horizontalen den in Fig. 1B angedeuteten Lenkkopfwinkel W bildet; erfindungsgemäß ist ein Lenkkopfwinkel von 68° bis 72° , insbesondere ein solcher Lenkkopfwinkel W von 70° vorgesehen. Ein solcher Lenkkopfwinkel gewährleistet auch bei erheblicher Last auf dem Vorderrad 70 ein agiles und gut kontrollierbares Lenkverhalten. Typischerweise hat das Vorderrad 70 eine 15 Zoll Felge 71, auf der ein Radreifen 72 sitzt; vorzugsweise ein typischer Motorradreifen der Reifentype 120/70 R15. Das Vorderrad 70 ist mit einer hydraulisch betätigbaren Scheibenbremsanlage versehen, die einen, mit zwei Bremsbacken ausgerüsteten Bremssattel hat, der an einem unteren Standbein 74 der Teleskopfedergabel 80 befestigt ist.

Vor der Teleskopfedergabel 80 ist eine vordere Ladefläche 37 auf einer U-förmigen Halterung 63 vorgesehen, die mittels Stützen 65 und 65' an den ansteigenden einrohrigen Pfeilern 43 bzw. 43' des unteren Tragelementes 40 abgestützt sind.

Auf dieser vorderen Ladefläche 37 kann ein Ladekorb 38 oder sonstiger Gepäckträger vorgesehen werden der mit einer Nutzlast bis zu 50 kg belastet werden kann; beispielsweise kann hier ein speziell für Aufnahme und Beförderung von Postgut entwickelter Transportbehälter vorgesehen werden, wie er in dem Dokument EP 2433854 A2 beschrieben ist. Ferner ist an der U-förmigen Halterung 63 hängend eine Lampe 68 angebracht. Zusätzlich ist an dieser U-förmigen Halterung 63 eine Displayeinrichtung 67 abgestützt auf der Daten zum Betrieb des Fahrzeugs 2 darstellbar sind.

Unteres Tragelement 40 und oberes Tragelement 20 überlappen sich in der Fahrzeugmitte und werden hier von einem vertikalen Stützrahmen 50 durchsetzt. Dieser weist einen U-förmigen Bügel mit einem oberen, horizontal ausgerichteten Querstab 51 auf, an den auf beiden Seiten je ein vertikal abfallender Ast 52 und 52' anschließt, deren jeweiliges Ende mit dem jeweiligen unteren äußeren Längsträger 42 bzw. 42' verschweißt ist. Ein Überrollbügel 55 hat zwei vertikale Stützen 54 und 54', die je mit dem oberen Querstab 51 verbunden sind und je an den unteren hinteren Querträger 41 des unteren Tragelementes 40 angesetzt sind. Der Überrollbügel 55 ist hinter einem Fahrersitz-Rückenteil 13 angeordnet und ragt vertikal weit über den Kopf eines auf einem Fahrersitz 12 sitzenden Fahrers hinaus empor, beispielsweise bis zu einer Höhe von etwa 150 cm über der Fahrbahn empor, und schützt den Fahrer bei einem Unfall.

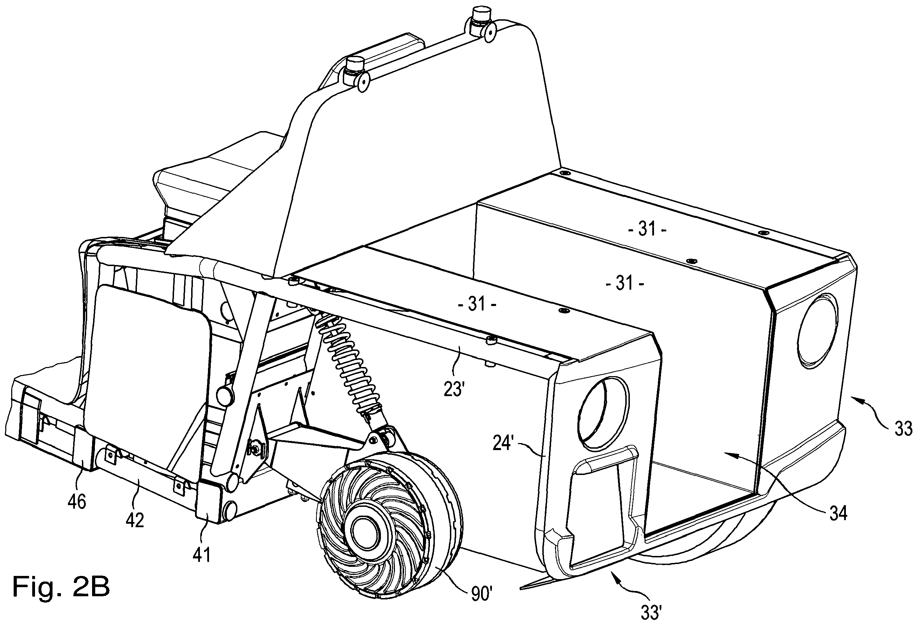

Unterhalb des Fahrersitzes 12 ist zwischen den beiden unteren äußeren Doppelrohr-Längsträgern 42 und 42' ein geschütztes und begrenztes Abteil 59 geschaffen, in dem ein oder zwei Fahrzeugbatterien 60 untergebracht werden. Typischerweise sind zwei Lithium/lonen-Fahrzeugbatterien vorgesehen, die je ein Gewicht von ca. 30 kg haben und zusammen eine Stromspeicherkapazität von etwa 5 kWh bereitstellen, womit das Fahrzeug 2 im normalen Fahrbetrieb eine Reichweite von rund 100 km erreicht. Die Fig.2 zeigt schematisch eine dieser Batterien, nämlich die Fahrzeugbatterie 60. Die beiden Batterien können auf einer oder zwei, sich in Querrichtung erstreckenden und auf Rollen gelagerten Schienen befestigt sein, die nach Öffnung des Abteils 59 seitlich herausgezogen werden können, um die Batterien zu entnehmen und an einer externen Ladestation aufzuladen. Typischerweise verbleiben die beiden Batterien zusammen mit einem dazwischen angeordneten Ladesystem auf den Schienen im Fahrzeugabteil 59, und die Aufladung erfolgt über einen Ladeanschluss 29, der an einer vertikalen Fahrzeugrückwand 8 angebracht ist. Zum Aufladen kann ein übliches Ladesystem dienen, das an eine übliche öffentlich zugängliche 16-Ampere Stromversorgung angeschlossen werden kann.

Zusätzlich zu den vorstehend benannten und beschriebenen Elementen kann die Skelettkarosserie 3 des Fahrzeugs 2 zu Verstärkungszwecken weitere Stützen und Streben enthalten, die insbesondere aus den Figuren 3B und 3C ersichtlich sind, hier aber aus Gründen der Übersicht nicht im Einzelnen aufgeführt sind. Insgesamt verfügt das Fahrzeug 2 über eine selbsttragende, in Karosserie-Skelett-Bauweise ausgeführte, selbsttragende, biegesteife und stabile Karosserie 3, an der die drei Fahrzeugräder 70, 100 und 100' angebracht sind.

An der Karosserie 3 ist eine Fahrzeugverkleidung 4 bzw. die Fahrzeughaut oder das Fahrzeuggehäuse aufgehängt. Typischerweise wird diese Fahrzeugverkleidung 4 aus mehreren Kunststoffformteilen zusammengesetzt, die ihrerseits vorzugsweise aus Polyethylen bestehen. Zu diesen Verkleidungsteilen gehören Fahrzeugseitenteile 5 und 5', die vertikale Fahrzeugrückwand 8, eine Auskleidung 9 der Fahrerzelle 10 mit Fußraum 11 und Fahrersitzrücken 13, ferner eine Fahrzeugvorderfront 6 und schließlich eine Abdeckung 31 über den beiden Anordnungen des Stützkonstruktion 30 und den darunter befindlichen Hinterrädern 100 und 100'. Innerhalb der Fahrerzelle 10 befindet sich ein, an der Karosserie 3 befestigter Fahrersitz 12, dem ein Sicherheitsgurt zugeordnet sein kann.

Am Fahrzeug 2 sind die beiden Hinterräder 100 und 100' motorisch angetrieben. Als Antrieb dient je ein Radnabenmotor 90 - nachstehend kurz: der Motor 90 - der für eine Nennleistung größer 2 kW und kleiner 6 kW ausgelegt ist. Gut geeignet ist und vorzugsweise eingesetzt wird ein handelsüblich erhältliches Produkt, nämlich der von GEM motors d.o.o., SI - 1241 Kamnik, Slowenien unter der Handelsbezeichnung Type G2.4 vertriebene Standardmotor; hierbei handelt es sich um einen mehrphasigen Synchronmotor, der über eine integrierte Motorsteuerung verfügt und dessen Rotor mit Permanentmagneten ausgerüstet ist; weitere Details lassen sich im Internet unter www.gemmotors.si abrufen.

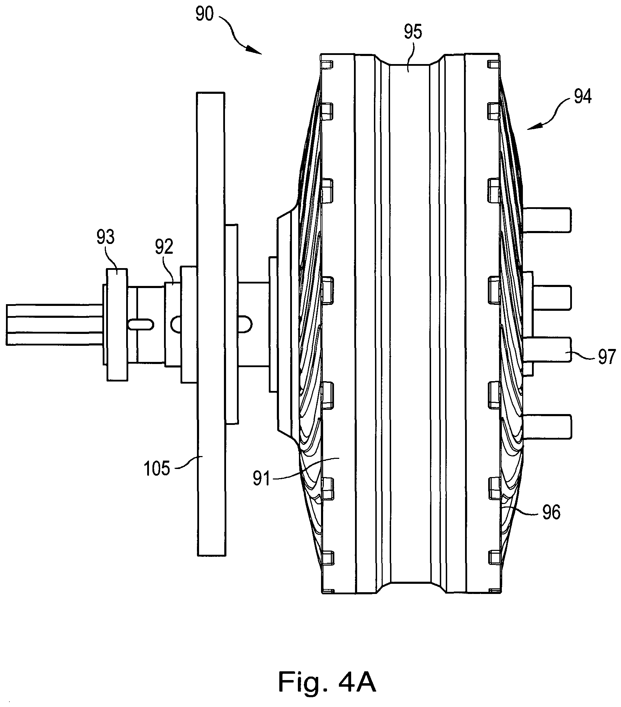

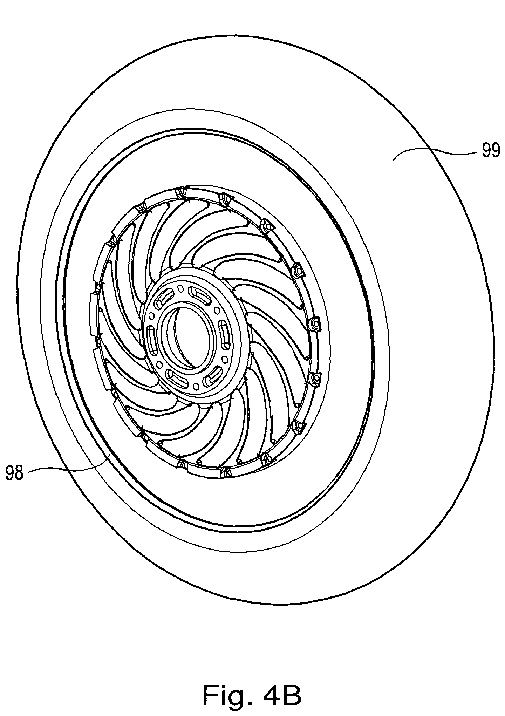

Dieser Motor 90 ist in den Fig. 4A und 4B dargestellt. Der Motor 90 bildet im Wesentlichen einen kreisrunden scheibenförmigen Körper mit einem Durchmesser von 281 mm und einer Breite von 140 mm; dieser Körper hat ein ortsfest zu montierendes Statorteil 91, das von einem topfförmigen Drehteil 94 umfasst wird, das in einstückiger Bauweise aus einem, dem Topfumfang entsprechenden Ringteil 95 und einer dem Topfboden entsprechenden Außenwand 96 besteht; am Innenumfang des Ringteils 95 sind Permanentmagnete montiert, die um Statorpole am Statorteil 91 rotieren. Der Motor 90 ist für einseitige Befestigung ausgelegt; hierzu steht von dem Statortteil 91 - bezüglich des Fahrzeugs 2 - ein Achszapfen 92 radial nach innen ab, der drehfest mit dem Statorteil 91 verbunden ist. Zuerst wird am Achszapfen 92 eine Bremsscheibe 105 einer Hinterrad-Scheibenbremsanlage drehfest montiert; anschließend wird der Achszapfen 92 in eine passende Bohrung an einem Radträger 103 eingeführt (vgl. Fig. 3A); ein abstehender Steg am Achszapfen 92 taucht in eine angepasste Nut an der Radträgerbohrung ein, um einen drehfesten Sitz zwischen Achszapfen 92 und Radträger 103 zu gewährleisten; auf ein endständiges Gewinde 93 am Achszapfen 92 wird eine Mutter geschraubt und gesichert. Zwischen Statorteil 91 und Drehteil 94 ist eine Dichtung in Form eines Simmerings eingesetzt, die das Eindringen von Staub und Wasser verhindert. Von der Außenwand 96 stehen Bolzen 97 ab, an denen eine Hinterradfelge 98 montiert und festgelegt wird, auf der ein Hinterradreifen 99 aufgezogen wird. Vorzugsweise ist als Hinterradreifen 99 ein üblicher 15 Zoll Motorradreifen der Reifentype 120/70 R15 vorgesehen. Felge 98, deren Felgenhorn und die Anbringung des Reifens 99 am Felgenhorn gewährleisten eine Anordnung, bei welcher der Hinterradreifen 99 den scheibenförmigen Motor 90 umfasst, so dass Motor 90 und Hinterradreifen 99 gemeinsam in radialer Ausrichtung fluchtend angeordnet sind. Der Motor 90 bildet ein an der Fahrzeugradaufhängung stationär und dauerhaft montiertes Teil, von dem Felge 98 und Hinterradreifen 99 leicht getrennt und ausgetauscht werden können, wie das für einen Pkw-Reifen üblich ist. Der Achszapfen 92 ist hohl ausgebildet, und durch die resultierende Bohrung sind Kabel geführt, über welche der Motor 90 mit Strom, Spannung und Signalen versorgt wird.

Der Motor 90 wird mit einer Gleichspannung von 48 V betrieben, die von den Fahrzeugbatterien 60 bereitgestellt wird. Der Motor ist für ein Nenn-Drehmoment von 145 Nm ausgelegt; das Fahrzeug 2 erreicht mit den 15 Zoll Hinterradreifen bei einer Motorumdrehungsgeschwindigkeit von etwa 480 Umdrehungen/Minute eine Höchstgeschwindigkeit von 45 km/h. Der Motor 90 ist mit einer integrierten Motorsteuerung versehen, die über ein üblichen CAN-Netzwerk mit dem Controller an der Fahrzeugkarosserie kommuniziert. Zwischen Controller und jeder Motorsteuerung findet ein wechselseitiger Datenaustausch statt. Der Controller kontrolliert an jedem Motor dessen Motorsteuerung, die daraufhin den zugehörigen Motor veranlasst, die vom Controller vorgegebene Betriebsweise einzunehmen und auszuführen. Der hier eingesetzte Radnabenmotor kann beide Laufrichtungen in gleicher Weise ausführen, so dass an beiden Hinterrädern 100 und 100' des Fahrzeugs 2 der gleiche Motor eingesetzt werden kann, der dann lediglich die Hauptlaufrichtung tauscht.

Jedes Hinterrad 100, 100' ist über je einen Radträger 103, 103' einer Radaufhängung drehbar an der Karosserie 3 gehalten. Jeder Radträger 103, 103' ist unter anderem über je einen Federdämpfer 112, 112' an je einem oberen äußeren Längsträger 22, 22' des oberen Tragelementes 20 der Fahrzeugkarosserie 3 abgestützt.

Jedes Hinterrad 100, 100' ist drehfest mit einer Bremsscheibe 105 einer Hinterrad-Scheibenbremsanlage verbunden, die mit einer elektromechanischen Parkbremse ausgerüstet ist. Diese Bremsscheibe 105 ist am Radzapfen 92 des jeweiligen Radnabenmotors 90, 90' drehfest montiert. Jeder Hinterrad-Bremscheibe 105 ist ein Bremssattel 106 zugeordnet, der über eine Halteplatte 104 ortsfest am Radträger 103 befestigt ist. Am/im Bremssattel 106 sind die Komponenten einer hydraulisch betätigbaren Bremskolben/Bremszylinder-Anordnung und die Komponenten einer elektromechanischen Parkbremse untergebracht. Dem Bremssattel 106 sind zwei verstellbare Bremsbacken zugeordnet, die bei hydraulisch oder elektromechanisch bewirkter Verstellung des Bremskolbens gegen die Bremsscheibe105 gepresst werden und dann eine Bremswirkung auf das Hinterrad 100 bzw. 100' ausüben. Diese Bremsbacken werden einerseits beim Anziehen des schwenkbaren Bremshandgriffes 83 am Fahrzeuglenker 81 über die dort angebrachte hydraulische Bremseinrichtung betätigt, welche auch die Scheibenbremsanlage am Vorderrad 70 mit Hydraulikmitteldruck versorgt. Hierzu ist im Bremssattel 106 der Hinterrad-Scheibenbremsanlage eine Bremskolben/Bremszylinder-Anordnung untergebracht, deren Bremskolben mit dem Druck des Hydraulikmittels beaufschlagbar ist, das über je eine Hydraulikmitteleitung jeder Hinterrad-Scheibenbremsanlage zugeführt wird.

Andererseits und zusätzlich können die Bremsbacken jeder Hinterrad-Scheibenbremsanlage über die elektromechanische Parkbremse betätigt werden, deren Komponenten im Bremssattel 106 jeder Hinterrad-Scheibenbremsanlage untergebracht sind. Zu diesen Komponenten gehört ein elektrischer Parkbremsmotor, der über einen Zahnriemen einen mehrstufigen, ein hohes Untersetzungsverhältnis liefernden Getriebemechanismus treibt, von dem wiederum eine mit Außengewinde versehene Spindel angetrieben wird, die eine mit dem Bremskolben gekoppelte Vorschubmutter in Drehung versetzt. Je nach Drehrichtung der Spindel wird die Vorschubmutter am Spindelgewinde vorwärts oder rückwärts bewegt. Eine Vorwärtsbewegung bringt die Vorschubmutter in Kontakt mit dem Bremskolben und verstellt diesen innerhalb des Bremszylinders. Wegen des hohen Untersetzungsverhältnisses (beispielsweise bis zu 50 : 1) wird bei kurzem Weg hohe Kraft auf die Bremsbacken und deren Bremsbeläge übertragen, die das Rad schnell, sicher und dauerhaft zum Stillstand bringen; das mit der elektromechanischen Parkbremse gekoppelte Hinterrad wird in einen Parkbremsmodus versetzt, in dem eine Drehung des Hinterrades unterbunden ist. Jede elektromechanische Parkbremse hat eine, in den Bremssattel integrierte, Parkbremssteuereinheit, die vom Controller 15 angesteuert und kontrolliert wird. Während einer Aktivierung der Parkbremse zieht der Parkbremsmotor Strom, was von der Parkbremssteuereinheit registriert und dem Controller 15 gemeldet wird; folglich kennt der Controller 15 den Parkbremsmodus-Zustand jedes Hinterrades 100 und 100'. Der Spindelmechanismus ist selbstarretierend, so dass ein, von der aktivierten Parkbremse geschaffener Parkbremsmodus auch bei stromlos geschaltetem Fahrzeug arretiert und wirksam bleibt. Im Falle einer Notbremssituation kann zusätzlich zu dem mit einem Anziehen des Bremshandgriffes am Fahrzeuglenker auslösbaren regulären (hydraulisch betätigten) Bremsvorgang auch der Parkbremsmodus aktiviert werden; weil dieser Parkbremsvorgang recht abrupt greift, prüft der Controller 15 die aktuelle Fahrzeuggeschwindigkeit, und löst bei bewegtem Fahrzeug den Parkbremsmodus nur dann aus, wenn die Fahrzeuggeschwindigkeit kleiner/gleich 2 km/h beträgt.

Die am erfindungsgemäßen Fahrzeug für die Hinterräder vorgesehene, hydraulisch betätigbare Hinterrad-Scheibenbremsanlage mit integrierter elektromechanischer Parkbremse kann beispielsweise von Continental Automotive GmbH, 30165 Hannover, DEUTSCHLAND unter der Fachbezeichnung EPB-Ci (steht für:
Electric Parking Brake - Caliper integrated) bezogen werden;
hier Continental Teil-Nr. 11.6236-0089.4 für eine Bremsanlage am linken Hinterrad
sowie Continental Teil-Nr. 11.6236-0090.4 für eine Bremsanlage am rechten Hinterrad.

Die erfindungsgemäß realisierte Hinterradbaueinheit mit scheibenförmigem Radnabenmotor 90, 90' und daran direkt und getriebelos angebrachter Radfelge 98 mit Hinterradreifen 99, welcher den scheibenförmigen Motor 90 in Scheibenrichtung radial umgreift, und ferner mit der den Motor 90 einschließlich Rad 99 an der Karosserie 3 haltenden Radaufhängung einschließlich Radträger 103 kann mit vergleichsweise geringer Breite gefertigt werden, die typischerweise nur 1/3 der gesamten Fahrzeugbreite ausmacht. Folglich verbleibt im hinteren Bereich des Fahrzeugs 2 unterhalb der virtuellen Ladefläche 32 zwischen den beiden, beabstandet zueinander angeordneten Hinterradbaueinheiten 33 und 33', ein freier Raum 34, dessen Breite etwa 1/3 der Fahrzeugbreite ausmacht, und der für Transportzwecke genutzt wird. In diesen freien Raum 34 kann ein dauerhaft an der Fahrzeugkarosserie 3 befestigter geschlossener Transportbehälter eingesetzt sein, der hier als Zusatzbehälter 35 bezeichnet wird.

Dieser Zusatzbehälter 35 hat einen Innenraum, der über eine schwenkbare Türe 36 in einer vertikalen Fahrzeugrückwand 8 zugänglich ist. Bei Bedarf kann auf einem Boden dieses Zusatzbehälters 35 eine paarweise Anordnung von teleskopartig ineinander verschiebbaren Schienen angeordnet sein, auf denen ein Schlitten fährt, der durch die geöffnete Türe 36 hindurch aus dem Zusatzbehälter-Innenraum herausgefahren werden kann, um mit Transportgut beladen zu werden.

Wie vorstehend beschrieben, weist das obere Tragelement 20 über jedem Hinterrad 100 und 100' je eine paarweise Anordnung aus oberem äußeren Längsträger 22, bzw. 22' und oberem inneren Längsträger 23, bzw. 23' auf, die sämtlich in einer zur Fahrzeugachsen-Ebene parallelen Ebene angeordnet sind und die in Fahrzeuglängsrichtung ausgerichtet sind. Diese Längsträger 22, 22', 23 und 23' bilden zusammen eine Stützkonstruktion 30, an der im Rahmen der vorliegenden Erfindung ein auswechselbarer Transportbehälter 120 abstützbar, anbringbar und festhaltbar ist. Dieser Transportbehälter 120 wird zeitweilig an dieser Stützkonstruktion 30 mit Hilfe eines Schnellverschlusssystems festgehalten, das nachstehend in Einzelnen beschrieben wird. Die Stützkonstruktion 30 ist mit einer Abdeckung 31 abgedeckt, welche jede Hinterradbaueinheit 33 einhaust, wie das insbesondere Fig. 2B zu entnehmen ist.

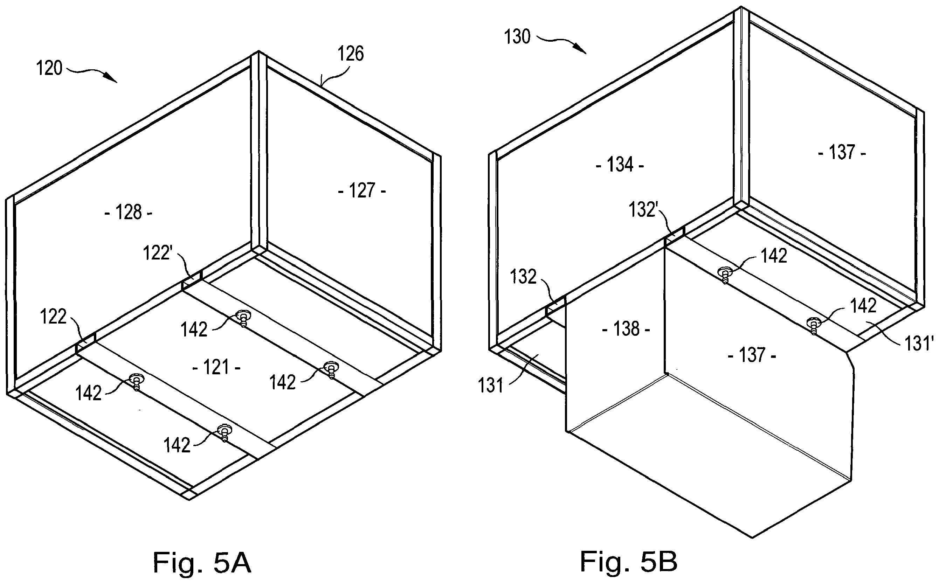

Typischerweise wird dieser Transportbehälter 120 die gesamte verfügbare virtuelle Ladefläche 32 weitgehend vollständig beanspruchen und einnehmen. Ein solcher Transportbehälter 120 bildet dann im Wesentlichen einen allseitig geschlossenen quaderförmigen Kasten mit Bodenwand 121, Deckenwand 126 und umlaufenden Seitenwänden 127 einschließlich der Rückwand 128. Fig. 5A zeigt einen Blick auf die Rückwand 128 des Transportbehälters 120. Die Wände des Transportbehälters 120 können aus üblichem Plattenmaterial aus Leichtmetall, Kunststoff, Kunststoff-Verbundmaterial, Holz und dgl. bestehen. Alternativ kommt ein Gestell aus Metallstangen in Betracht, an denen Planen befestigt sind. An den Transportbehälterwänden ist eine oder sind mehrere verschließbare Tür(en ) ausgebildet, durch die hindurch ein Zugriff auf das im Transportbehälter-Innenraum gelagerte Transportgut möglich ist. An der Innenseite der Bodenwand 121 sind zwei beabstandete, längere, sich in Fahrzeuglängsrichtung erstreckende Hohlprofile 122 und 122' angebracht, die einen im Querschnitt rechteckigen oder halbkreisförmigen Tunnel begrenzen, der zur Transportbehälter-Rückwand 128 hin offen ist, so dass in jeden Tunnel je ein Tragarm eines Gabelstaplers oder einer sonstigen Hubeinrichtung einfahren kann, um den auf dem Fahrzeug 2 abgestützten Transportbehälter 120 anzuheben, nachdem die erfindungsgemäß vorgesehene Verriegelungseinrichtung 140 des Schnellverschlusssystems entriegelt worden ist. Von der Außenseite der Bodenwand 121 stehen mehrere zapfenförmige Riegel 142 ab, über welche der auf dem Fahrzeug 2 abgestützte Transportbehälter 120 an einer, am Fahrzeug 2 befestigten Verriegelungseinrichtung 140 festgehalten werden kann.

Die Fig. 5B zeigt einen Blick auf einen alternativen Transportbehälter, der hier als gemeinsamer Transportbehälter 130 bezeichnet wird. Dieser gemeinsame Transportbehälter 130 wird dadurch erhalten, dass an die entsprechend ausgeschnittene Bodenwand 121 des Transportbehälters 120 eine Wanne angesetzt worden ist, die aus den umlaufenden Seitenwänden und der Bodenwand des Zusatzbehälters 35 besteht. Folglich passt diese Wanne in den freien Raum 34 zwischen den beiden Hinterradbaueinheiten 33 und 33", wenn der gemeinsame Transportbehälter 130 auf der Stützkonstruktion 30 an der Fahrzeugkarosserie 3 abgestützt ist. Der Transportbehälter 120 bildet mit dem daran angesetzten Zusatzbehälter 35 ein gemeinsames Innenvolumen, das für Transportzwecke genutzt werden kann.

Der eigentliche Transportbehälter 120 bildet typischerweise einen quaderförmigen Kasten, der mit Kastenlängsrichtung in Fahrzeugbreitenrichtung am Fahrzeug 2 angeordnet wird. Der ebenfalls quaderförmige, aber kleinere Zusatzbehälter 35 wird an der Transportbehälterbodenwand 121 mittig und mit der Zusatzbehälterlängsrichtung orthogonal zur Transportbehälterlängsrichtung angesetzt, so dass ein, aus eigentlichem Transportbehälter 120 und Zusatzbehälter 32 bestehender gemeinsamer Transportbehälter 130 erhalten wird. Dieser gemeinsame Transportbehälter hat in Richtung der Fahrzeugbreite einen im Wesentlichen T-förmigen Querschnitt, wobei der eigentliche Transportbehälter 120 einen T-Balken 134 und der Zusatzbehälter 35 einen T-Stamm 135 bildet. Angrenzend an beide Zusatzbehälterseitenfronten 132 und 132' weist der gemeinsame Transportbehälter130 je einen Bodenwandabschnitt 131 und 131' auf, von dem der oder die Riegel 123 der erfindungsgemäß vorgesehenen Verbindungseinrichtung vertikal abstehen. Nachstehend werden die Bodenwand des eigentlichen Transportbehälters 120 und diese beiden Bodenwandabschnitte 131 und 131' des gemeinsamen Transportbehälters 130 gemeinsam als "Bodenwand 121" bezeichnet.

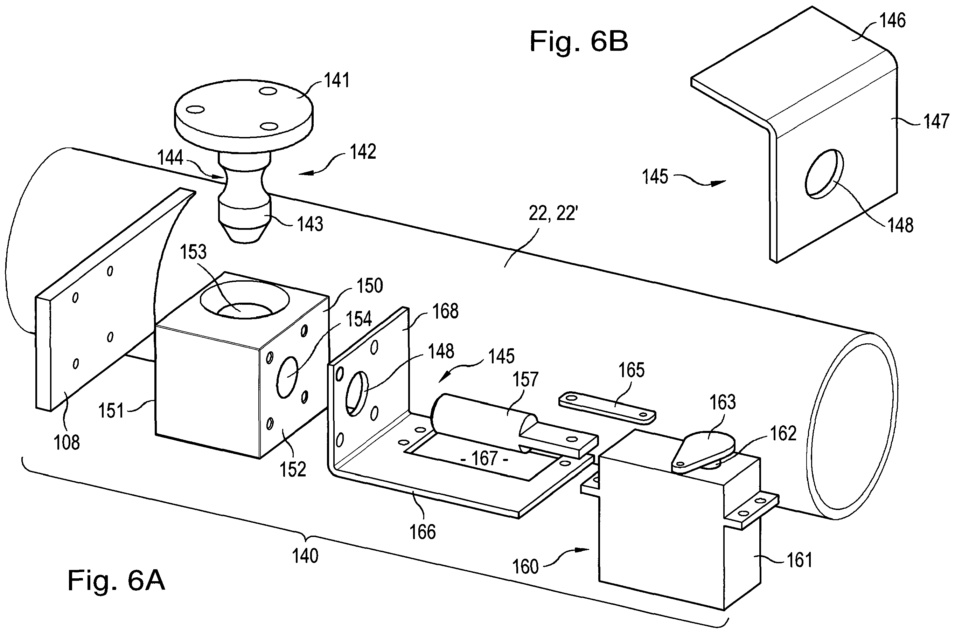

Die Fig. 6A zeigt schematisch die wesentlichen Komponenten einer Ausführungsform einer erfindungsgemäßen Verriegelungseinrichtung 140. Hier bildet der an der Transportbehälterbodenwand 121 angebrachte Riegel 142 einen geraden, länglichen runden Zapfen, der einstückig an einer Befestigungsplatte 141 angeformt ist. Der zapfenförmige Riegel 142 und die Befestigungsplatte 141 bestehen typischerweise aus Stahl. In der Befestigungsplatte 141 sind Bohrungen ausgespart, durch welche Schraubbolzen führbar sind, mit welchen die Befestigungsplatte 141 an der Außenseite der Transportbehälterbodenwand 121 so befestigt wird, dass der zapfenförmige Riegel 142 vertikal nach unten von der Bodenwand 121 absteht. Der Riegel 142 hat einen Zapfenmantel 143, in dem eine umlaufende Zapfennut 144 ausgespart ist. In der konkreten Ausführungsform hat der Riegel 142 ein Länge von etwa 5 cm.

Die Fig. 6B zeigt einen alternativen Riegel 145, der aus einem geraden länglichen Schenkel 147 eines bandförmigen, aus Eisenmaterial bestehenden Winkelstückes gebildet ist. In diesem Schenkel 147 ist eine, zu dessen Längsrichtung orthogonal ausgerichtete Bohrung 148 ausgespart, in welche das Sperrglied der Verriegelungseinrichtung einführbar ist. Der andere Schenkel 146 des Winkelstückes kann an der Außenseite der Transportbehälterbodenwand 121 angelegt und befestigt werden.

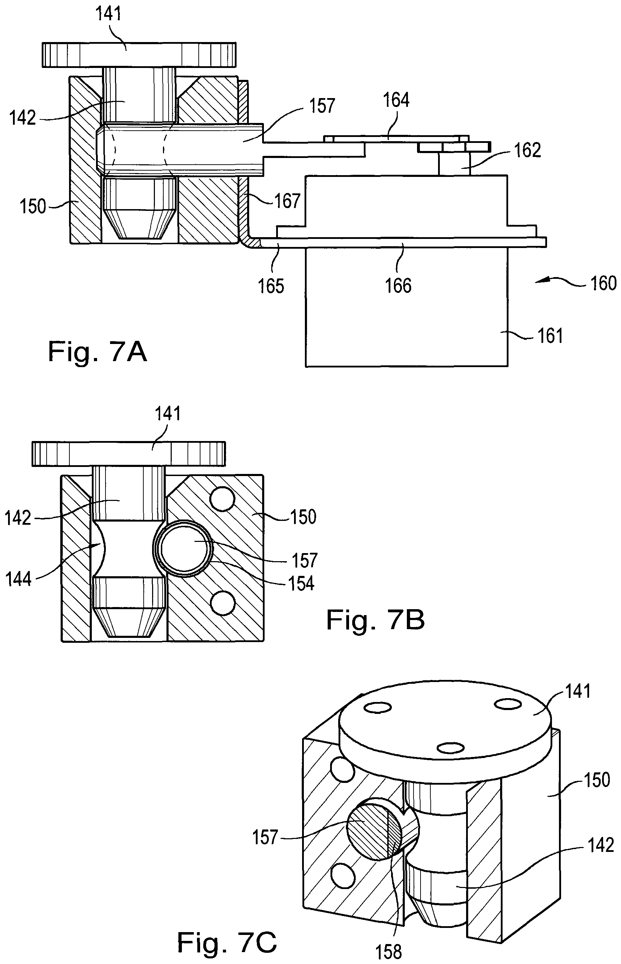

Wie Fig. 6A zeigt, ist an einem Rohrabschnitt des oberen inneren Längsträgers 23 eine vertikal abstehende, auf den oberen äußeren Längsträger 22 zu gerichtete Montageplatte 108 angeschweißt, an der Bohrungen zum Hindurchführen von Schraubbolzen ausgespart sind. Mit Hilfe dieser Schraubbolzen wird an der Montageplatte 108 ein, typischerweise würfelförmiger bis quaderförmiger Schlosskörper 150 befestigt, der eine erste Seitenfläche 151 und eine gegenüberliegende zweite Seitenfläche 152 hat. In diesem Schlosskörper 150 ist eine Aufnahmebohrung 153 ausgespart ist, in welche der zapfenförmige Riegel 142 eintreten kann. Zusätzlich zu dieser Aufnahmebohrung 153 ist in dem Schlosskörper 150 eine Sperrbohrung 154 ausgespart, die orthogonal zur Aufnahmebohrung 153 ausgerichtet ist und diese teilweise schneidet. Ferner ist ein längliches, zylinderförmiges Sperrglied 157 vorhanden, das einen Durchmesser hat, der geringfügig kleiner ist, als ein Durchmesser der Sperrbohrung 154, so dass das in die Sperrbohrung 154 eingeführte Sperrglied 157 innerhalb der Sperrbohrung 154 verschiebbar geführt ist. Wie die Schnittdarstellungen nach den Fig. 7A, 7B und 7C mehr im Einzelnen zeigen, sind solche Verhältnisse geschaffen, dass in einer Riegel-Festhalte-Position
- der zapfenförmige Riegel 142 in die Aufnahmebohrung 153 eingeführt ist;
- das Sperrglied 157 in die Sperrbohrung 154 eingeführt ist; und
- ein Sperrgliedabschnitt 158 einen gemeinsamen Volumenabschnitt in der Aufnahmebohrung 153, in der Zapfennut 144 und in der Sperrbohrung 154 besetzt und damit den Riegel 142 formschlüssig in dem Schlosskörper 150 festhält.

Ferner zeigt Fig. 6A einen schematisch angedeuteten ersten Elektromotor 160, der in einem quaderförmigen Gehäuse 161 sitzt; nach einer Aktivierung durch den Controller 15 verschwenkt eine motorisch angetriebene Welle 162 des ersten Elektromotors 160 einen Hebel 163, der über ein Verbindungsstück 164 gelenkig mit dem Sperrglied 157 verbunden ist. Wenn dieser Hebel 163 auf den Schlosskörper 150 zu gerichtet ist, ist das Sperrglied 157 soweit wie möglich, in die Sperrbohrung 154 eingeführt; das Sperrglied 157 nimmt die insbesondere mit Fig. 7A gezeigte Riegel-Festhalte-Position ein, in welcher der Sperrgliedabschnitt 158 in die Zapfennut 144 eingreift und den Riegel 142 formschlüssig innerhalb der Aufnahmebohrung 154 festhält.

Wie Fig. 6A ferner zeigt, ist zusätzlich ein Winkelstück 165 vorgesehen, das einen ersten Schenkel 166 hat, in dem eine rechteckige Aussparung 167 ausgeschnitten ist, in welche das Elektromotorgehäuse 161 eingesetzt werden kann und darin mit Hilfe gemeinsamer Befestigungsmittel, insbesondere Schrauben und Muttern festgehalten wird. Das Winkelstück 165 hat einen zweiten Schenkel 168, in dem eine Durchtrittsöffnung 169 für das Sperrglied 157 ausgespart ist. Dieser zweite Schenkel 168 wird an der zur Montageplatte 108 gegenüber und entfernt befindlichen zweiten Seitenfläche 152 des Schlosskörper 150 angelegt und mit Hilfe von Schraubbolzen daran befestigt. Der in die Aussparung 167 eingesetzte erste Elektromotor 160 nimmt einen festen, vorgegebenen Abstand zum Schlosskörper 150 ein, und das vom Hebel 163 verstellte Sperrglied 157 kann sicher die Riegel-Festhalte-Position einnehmen.

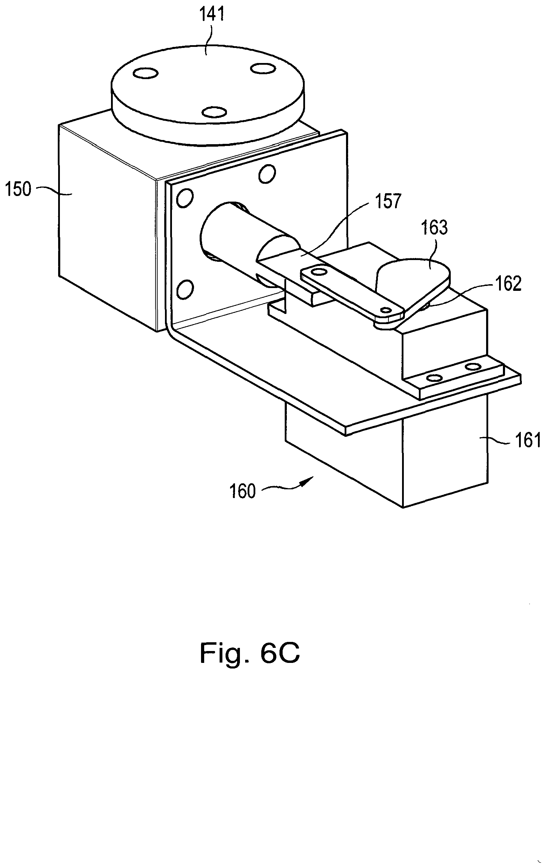

Die Fig. 6C zeigt die aus den vorstehend erläuterten Komponenten bestehende und vollständig zusammen gebaute Verriegelungseinrichtung 140. Das Sperrglied 157 nimmt die Riegel-Freigabe-Stellung ein.

Die Fig. 7A, 7B und 7C zeigen anhand teilweise weggebrochener Schnittdarstellungen den Schlosskörper 150, den in die Aufnahmebohrung 153 eingeführten Riegel 142, und das in die Sperrbohrung 154 eingeführte Sperrglied 157. In Fig. 7A nimmt das Sperrglied 157 die Riegel-Festhalte-Position ein, und aus den Fig. 7B und 7C ist ohne Weiteres ersichtlich, wie in dieser Position der Sperrgliedabschnitt 158 in die Zapfennut 144 eingreift und damit den gesamten Riegel 142 formschlüssig im Schlosskörper 150 und innerhalb dessen Aufnahmebohrung 153 festhält.

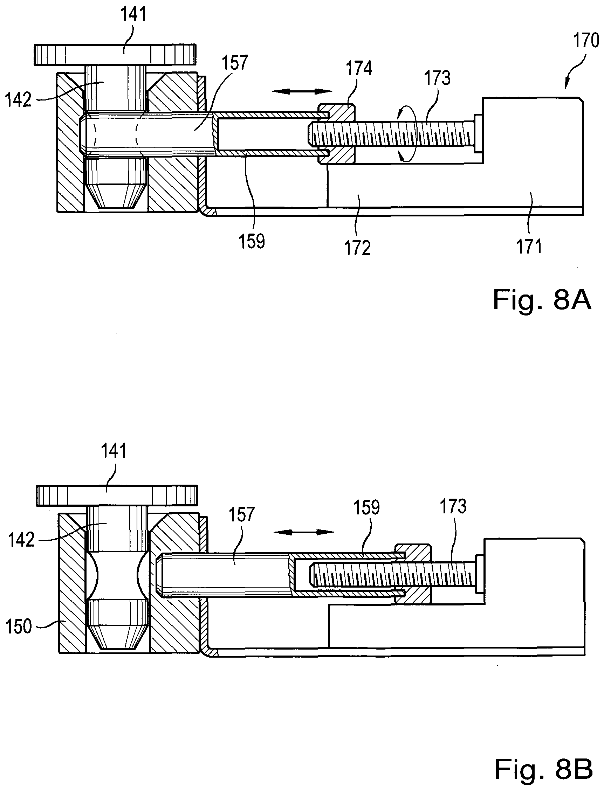

Die Fig. 8A und 8B zeigen einen alternativen Elektromotor 170 an/in der erfindungsgemäßen Verriegelungseinrichtung 140. Der alternative Elektromotor 170 ist als elektrischer Schrittmotor ausgebildet und hat ein Gehäuse 171, das auf dem ersten Schenkel 166 des Winkelstückes 165 befestigt ist. Der alternative Elektromotor 170 treibt eine horizontal ausgerichtete Spindel 173, deren Außengewinde in eine Vorschubmutter 174 eingreift, die längs eines, vom Motorgehäuse 171 abstehenden Anschlags 172 verschiebbar und drehfest geführt ist. Am zum Schlosskörper 150 entfernten Ende ist am Sperrglied 157 einstückig eine Sperrgliedhülse 159 angesetzt, deren Ende mit der Vorschubmutter 174 fest verbunden ist. In den Innenraum der Sperrgliedhülse 159 kann die Spindel 173 eintreten.

Je nach Drehrichtung der Spindel 173 wird die Vorschubmutter 174 und das damit gekoppelte Sperrglied 157 auf den Schlosskörper 150 zu oder von diesem weg bewegt. Eine auf den Schlosskörper 150 zu gerichtete Bewegung verstellt das Sperrglied 157 in die mit Fig. 8A dargestellte Riegel-Festhalte-Position, und eine von dem Schlosskörper150 weg gerichtete Bewegung verstellt das Sperrglied 157 aus der Riegel-Festhalte-Position in die mit Fig. 8B dargestellte Riegel-Freigabe-Position. Der als Schrittmotor ausgebildete alternative Elektromotor 170 wird nach Vorgabe des Controllers 15 die für den Verstellweg des Sperrgliedes 157 erforderliche Anzahl Spindelumdrehungen ausführen.

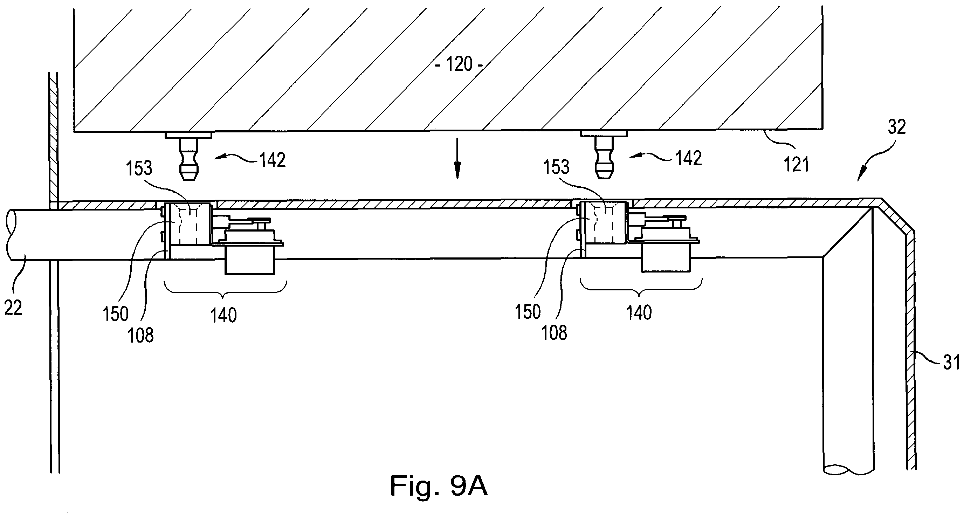

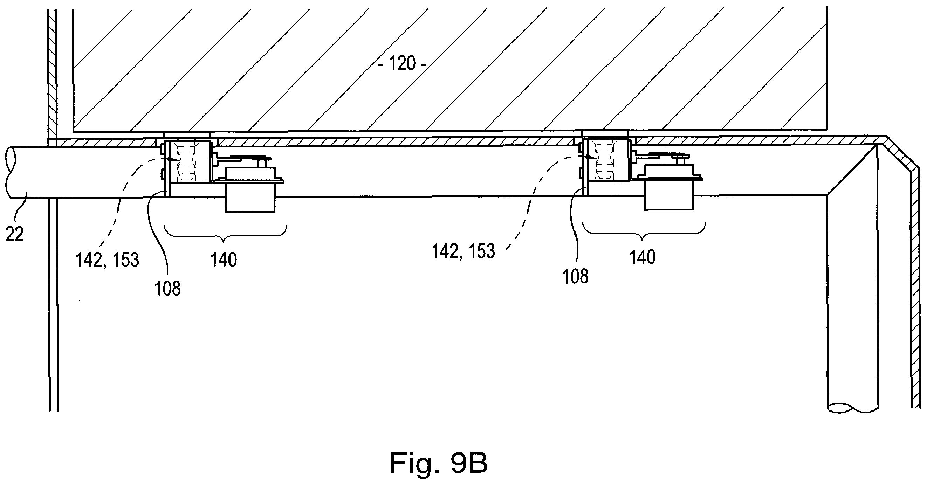

Die Fig. 9A und 9B zeigen schematisch das Annähern des Transportbehälters 120 an und das Aufsetzen des Transportbehälters 120 auf der virtuellen Ladefläche 32, die hier mit einer Abdeckung 31 über dem oberen inneren Längsträger 23 der Stützkonstruktion 30 angedeutet ist. Die Fig. 9A zeigt die Bodenwand 121 des Transportbehälters 120 noch ein stückweit von der Abdeckung 31 entfernt. Von der Bodenwand 121 stehen zwei, zueinander beabstandet angeordnete zapfenförmige Riegel 142 vertikal ab. An dem oberen inneren Längsträger 23 sind über je eine Montageplatte 108 zwei Verriegelungseinrichtungen 140 angebracht. Jede Verriegelungseinrichtung 140 hat einen Schlosskörper 150, in dem eine gestrichelt angedeutete Aufnahmebohrung 153 ausgespart ist. Es sind solche Anordnungen verwirklicht, dass jeder sich am absenkenden Transportbehälter 120 befindliche Riegel 142 in die passende Aufnahmebohrung 153 eintreten kann.

Die Fig. 9B zeigt den auf der Abdeckung 31 aufgesetzten Transportbehälter 120. Jeder Riegel 142 ist in die zugeordnete Aufnahmebohrung 153 eingetreten. Nachdem das Sperrglied 157 aus der anfänglich eingenommenen Riegel-Freigabe-Stellung mit Hilfe des jeweiligen aktivierten Elektromotors 160, 170 in die Riegel-Festhalte-Stellung verstellt worden ist, ist der Riegel 142 innerhalb der Verriegelungseinrichtung 140 verriegelt festgehalten, und der Transportbehälter 120 ist fest und fortbewegungssicher mit dem Fahrzeug 2 verbunden.

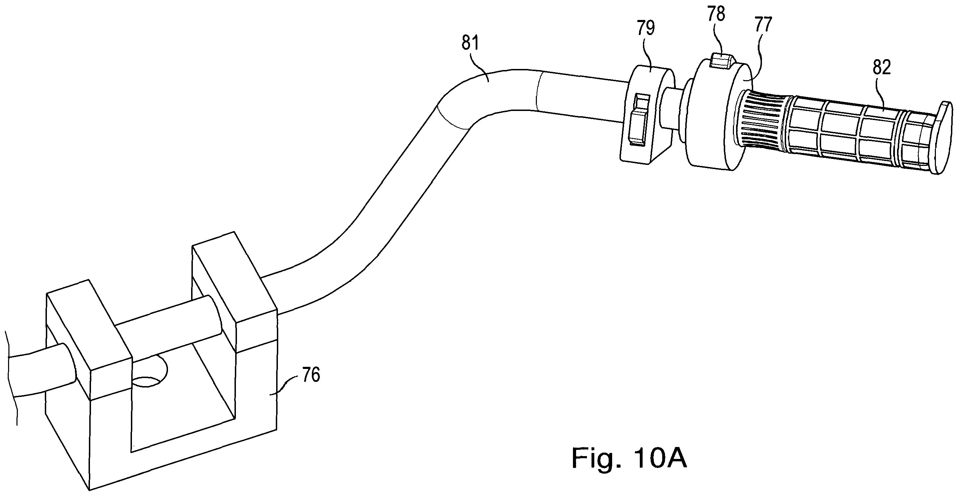

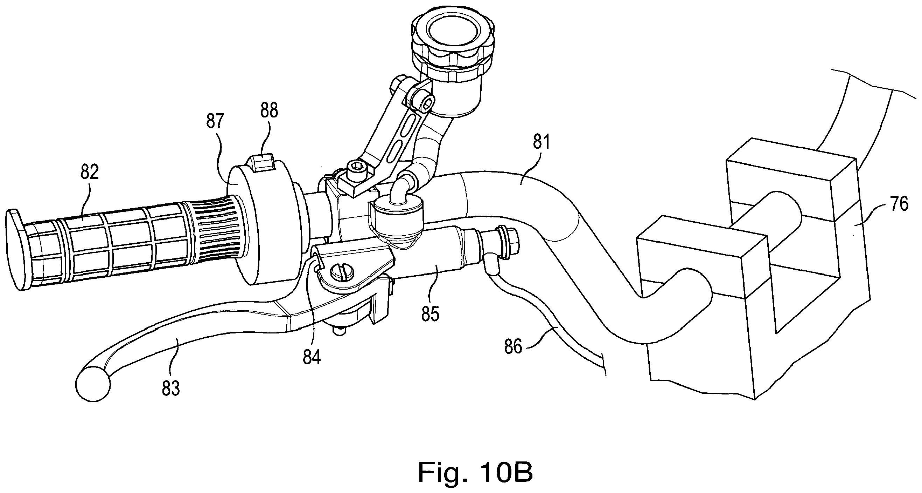

Die Fig. 10A und 10B zeigen ausschnittsweise den an der Teleskopfedergabel 80 montierten Fahrzeuglenker 81; Fig. 10A zeigt - aus Sicht eines auf dem Fahrersitz 12 sitzenden Fahrers - einen rechten Endabschnitt des Fahrzeuglenkers 81, und Fig. 10B zeigt - aus Sicht von vorne auf das Fahrzeug 2 - einen linken Endabschnitt des Fahrzeuglenkers 81. An diesem linken Endabschnitt des Fahrzeuglenkers 81 ist ein schwenkbar angelenkter, federbelasteter Bremshandgriff 83 angebracht, der mit einem schwenkbaren Stößel 84 versehen ist. Ein Anziehen des Bremshandgriffes 83 lässt diesen Stößel 84 in eine Hülse 85 eintauchen, in der sich eine Kolben/Zylinder-Anordnung einer hydraulischen Bremseinrichtung befindet. Hier ist eine zweistufige Wirkungsweise realisiert. Zuerst wird der Stößel 84 einen elektrischen Schalter betätigen, der daraufhin ein elektrisches Bremssignal generiert, das dem Controller 15 zugeführt wird, der daraufhin ein Motorbremssignal erzeugt, das den beiden Motorsteuerungen zugeführt wird, die daraufhin jeden Motor 90, 90' in einen Motorbremsmodus steuern, in welchem Fahrzeug-bewegungsenergie rekuperativ in elektrische Energie gewandelt wird, die den Fahrzeugbatterien zugeführt wird. Erst bei einem weiteren Anziehen des Bremshandgriffes 83 drückt der Stößel 84 auf den Kolben der Kolben/Zylinder-Anordnung der hydraulischen Bremseinrichtung und erhöht im Zylinder einen Hydraulikmitteldruck, der dann über eine Hydraulikmittelleitung 86 und weitere Leitungen dieser Art den Scheibenbremsanlagen an allen drei Fahrzeugrädern 70, 100 und 100' zugeführt wird. Das Vorderrad 70 ist nur mit einer hydraulisch betätigbaren Scheibenbremsanlage ausgerüstet. Jedes Hinterrad 100, 100' ist mit einer Hinterrad-Scheibenbremsanlage ausgerüstet, die eine hydraulisch betätigbare Bremskolben/Bremszylinder-Anordnung hat. Mit dem Anziehen des Bremshandgriffes 83 wird auch der Bremskolben dieser Bremskolben/-Bremszylinder-Anordnungen mit erhöhtem Hydraulikmitteldruck beaufschlagt, und die beiden Hinterräder 100 und 100' werden hydraulisch abgebremst. Daraufhin erfolgt zusätzlich zu der Motorbremsung eine gleichmäßige Verminderung der Fahrzeuggeschwindigkeit über die Aktivierung der Bremsscheiben an allen drei Fahrzeugrädern 70, 100 und 100'. Zusätzlich sind die Hinterrad-Scheibenbremsanlagen an den beiden Hinterrädern 100 und 100' mit je der vorstehend beschriebenen elektromechanischen Parkbremse versehen.

Neben dem Bremshandgriff 83 ist am linken Endabschnitt des Fahrzeuglenker 81 ein Signalkranz 87 mit verschiedenen elektromechanischen Schaltern montiert; hierzu gehören Schalter zur Betätigung von Licht und Blinkern, sowie ein Parkbremsschalter 88, der eine Parkbremse-Ein-Stellung oder eine Parkbremse-Aus-Stellung einnehmen kann. Eine Verstellung des Parkbremsschalters 88 aus einer gegebenen Stellung in eine andere Stellung sendet ein elektrisches Signal an den Controller 15, der daraufhin den Elektromotor im Bremssattel 106 jeder Hinterrad-Scheibenbremsanlage aktivieren wird, um jedes Hinterrad 100, 100' in den entsprechenden Parkbremszustand zu versetzen.

Am rechten Endabschnitt des Fahrzeuglenkers 81 ist ein Beschleunigungsdrehgriff 82 montiert. Neben dem Beschleunigungshandgriff 82 ist ein Signalkranz 77 fest montiert, an dem weitere elektrische Schalter angebracht sind; unter anderem ein Kippschalter 78, der die Funktion eines Notschalters hat; bei Betätigung dieses Kippschalters 78 werden sämtliche elektrischen Aktivitäten am Fahrzeug 10 augenblicklich gestoppt. Unterhalb des Kippschalter 78 - und in Fig.10A nicht zu erkennen - ist am Signalkranz 77 ein Schieberegeler angebracht, der zwei verschiedene Stellungen einnehmen kann und mit dem am Fahrzeug 2 ein Vorwärtsfahr- oder ein Rückwärtsfahr-Modus eingestellt wird. Um das Fahrzeug 2 in den Rückwärtsfahr-Modus zu steuern, müssen gleichzeitig der Bremshandgriff 83 angezogen und der Schieberegler entsprechend verstellt werden.

Neben dem Signalkranz 77 ist am rechten Endabschnitt des Fahrzeuglenkers 81 eine weitere Schalteranordnung angebracht, zu der ein elektromechanischer Verriegelungsschalter 79 gehört. Der Verriegelungsschalter 79 kann eine Verriegelung-Ein-Stellung oder eine Verriegelung-Aus-Stellung einnehmen. Der Verriegelung-Ein-Stellung des Verriegelungsschalters 79 ist die Riegel-Festhalte-Position des Sperrgliedes 157 zugeordnet. Der Verriegelung-Aus-Stellung des Verriegelungsschalters 79 ist die Riegel-Freigabe-Position des Sperrgliedes 157 zugeordnet. Eine Verstellung des Verriegelungsschalters 79 aus einer gegebenen Stellung in eine andere Stellung sendet ein elektrisches Signal an den Controller 15, der daraufhin die Elektromotoren 160 bzw. 170 sämtlicher Verriegelungseinrichtungen 140 aktivieren wird, um die entsprechende Verstellung des Sperrgliedes 157 auszuführen. Auf ein Verriegelungs-Aus-Signal hin wird der Controller 15 eine Verstellung des Sperrgliedes 157 aus der Riegel-Festhalte-Position in die Riegel-Freigabe-Position nur dann veranlassen, wenn geprüft und bestätigt ist, dass jedes Hinterrad 100 und 100' den Parkbremsmodus einnimmt.

### BEZUGSZEICHENLISTE

- 2: Fahrzeug, Elektrofahrzeug
- 3: Karosserie
- 4: Verkleidung
- 5, 5': Seitenteile
- 6: Vorderfront
- 7: Rückseite
- 8: vertikale Fahrzeugrückwand
- 9: Auskleidung Fahrerzelle
- 10: Fahrerzelle
- 11: Fahrerfußraum
- 12: Fahrersitz
- 13: Fahrersitz-Rückenteil
- 15: Platine
- 20: oberes Tragelement
- 21: oberer Querholm
- 22, 22': obere äußere Längsträger
- 23, 23': obere innere Längsträger
- 24, 24': abfallendes Rohr
- 25: unterer horizontaler Querträger
- 26: vorderer oberer Querträger
- 27: Hals (einer Kugelkopfkupplung)
- 28: Kugelkopfkupplung
- 29: Ladeanschluss für Batterie(en)
- 30: Stützkonstruktion
- 31: Abdeckung
- 32: (hintere) virtuelle Ladefläche
- 33, 33': Hinterradbaueinheiten
- 34: "freier Raum" (zwischen den beiden Hinterradbaueinheiten)
- 35: Zusatzbehälter
- 36: schwenkbare Türe des Zusatzbehälters
- 37: vordere Ladefläche
- 38: (vorderer) Ladekorb
- 40: unteres Tragelement
- 41: unterer hinterer Querträger
- 42, 42': unterer äußerer Doppelrohr-Längsträger
- 43, 43': einrohriger Pfeiler
- 44: rückwärts gewandte Brücke
- 45: massiver Block
- 46: unterer mittiger Querträger
- 47: unterer mittiger Längsträger
- 48: vorderer Endabschnitt des unteren mittigen Längsträgers
- 49: nach vorne schützende Barriere
- 50: vertikaler Stützrahmen
- 51: oberer horizontaler Querstab
- 52, 52': vertikal abfallender Ast
- 53: unterer mittiger Querstab
- 54, 54': vertikale Stützen (eines Überrollbügels)
- 55: Überrollbügel
- 59: Abteil (für Batterie(en))
- 60: Batterie(en)
- 63: U-förmige Halterung
- 65, 65': Stützen
- 67: Display
- 68: hängende Lampe
- 70: lenkbares Vorderrad
- 71: Vorderradfelge
- 72: Vorderrad reifen
- 74: unteres Standbein (einer Teleskopfedergabel 80)
- 75: untere Gabelbrücke (einer Teleskopfedergabel 80)
- 76: obere Gabelbrücke (einer Teleskopfedergabel 80)
- 77: Signalkranz (am rechten Endabschnitt des Fahrzeuglenkers 81)
- 78: Kippschalter (am Signalkranz 77)
- 79: Verriegelungsschalter
- 80: Teleskopfedergabel
- W: Lenkkopfwinkel
- 81: Fahrzeuglenker
- 82: Beschleunigungsdrehgriff
- 83: Bremshandgriff
- 84: Stößel (am Bremshandgriffkörper angelenkt)
- 85: Hülse
- 86: Hydraulikmittelleitung
- 87: Signalkranz (am linken Endabschnitt des Fahrzeuglenkers 81)
- 88: Parkbremsschalter
- 90: Radnabenmotor, auch kurz "Motor"
- 91: Statorteil (des Motors)
- 92: Achszapfen am Statorteil
- 93: endständiges Gewinde am Achszapfen
- 94: Drehteil
- 95: Ringteil
- 96: Außenwand (des Drehteils)
- 97: Bolzen
- 98: Hinterradfelge
- 99: Hinterradreifen
- 100, 100': Hinterrad
- 103: Radträger
- 104: Halteplatte (für Bremssattel)
- 105: Bremsscheibe einer Hinterrad-Scheibenbremsanlage)
- 106: Bremssattel (der Hinterrad-Scheibenbremsanlage)
- 108: Montageplatte (für Verriegelungseinrichtung)
- 120: (auswechselbarer) Transportbehälter
- 121: Bodenwand (des Transportbehälters 120)
- 122, 122': Hohlprofil
- 126: Deckenwand (des Transportbehälters 120)
- 127: umlaufende Seitenwände
- 128: Rückwand (des Transportbehälters 120)
- 130: gemeinsamer Transportbehälter
- 131, 131': Bodenwandabschnitte (des Transportbehälters 130)
- 132, 132': Seitenfronten (des Zusatzbehälters 35)
- 134: T-Balken (am T-förmigen Transportbehälter 130)
- 135: T-Stamm (am T-förmigen Transportbehälter 130)
- 137, 137': Hohlprofile
- 138: Rückwand (des Transportbehälters 130)
- 140: Verriegelungseinrichtung
- 141: Befestigungsplatte
- 142: Riegel, zapfenförmiger Riegel
- 143: Zapfenmantel
- 144: Zapfennut
- 145: alternativer Riegel
- 146: Schenkel (eines Winkelstückes)
- 147: anderer Schenkel (des Winkelstückes)
- 148: Bohrung
- 150: Schlosskörper
- 151: erste Seitenfläche (des Schlosskörpers 150)
- 152: zweite Seitenfläche (des Schlosskörpers 150)
- 153: Aufnahmebohrung
- 154: Sperrbohrung
- 157: Sperrglied
- 158: Sperrgliedabschnitt
- 159: Sperrgliedhülse
- 160: Elektromotor (an der Verriegelungseinrichtung 140)
- 161: Gehäuse (des Elektromotors 160)
- 162: Welle (des Elektromotors 160)
- 163: Hebel
- 164: Verbindungsstück
- 165: Winkelstück
- 166: erster Schenkel (des Winkelstücks 165)
- 167: rechteckige Aussparung)
- 168: zweiter Schenkel (des Winkelstücks 165)
- 169: Durchtrittsöffnung
- 170: alternativer Elektromotor (an der Verriegelungseinrichtung 140)
- 171: Gehäuse (des Elektromotors (170)
- 172: Anschlag
- 173: Spindel
- 174: Vorschubmutter

## Patentansprüche

1. Dreirädriges Elektrofahrzeug, nämlich ein dreirädriges Kleinkraftrad für die Güterbeförderung, das für reinen Elektroantrieb ausgelegt ist, und das die gesetzlichen Vorgaben aus der Verordnung (EU) Nr. 168/13 des Europäischen Parlaments und des Rates vom 15. Januar 2013 für Fahrzeuge der EG-Fahrzeugklasse L2e, hier insbesondere der Unterklasse L2e-U erfüllt, wobei
- das Elektrofahrzeug (2) eine steife, selbsttragende, in Skelettkarosserie-Bauweise ausgeführte Karosserie (3) hat, deren Skelettelemente überwiegend aus metallischen, runden Rohren und hohlen Vierkantprofilen bestehen, die zumeist miteinander verschweißt sind;
- an einem Vorderende (6) der Karosserie (3) eine Teleskopfedergabel (80) schwenkbar angelenkt ist, an der ein Vorderrad (70) und ein Fahrzeuglenker (81) mit verschiedenen Bedienungselementen, einschließlich einem Bremshandgriff (83) und einem Beschleunigungsdrehgriff (82) montiert ist;
- das Elektrofahrzeug (2) zwei elektromotorisch angetriebene Hinterräder (100 und 100') hat, die je über je eine Radaufhängung an der Karosserie (3) gehalten sind;
- an jedem Hinterrad (100 und 100') zum elektromotorischen Antrieb je ein Radnabenmotor (90, 90') getriebelos befestigt ist, der je mit einer integrierten Motorsteuerung versehen ist, und der je für eine maximale Nenndauerleistung größer 2 kW und kleiner 6 kW ausgelegt ist, insbesondere für eine maximale Nenndauerleistung von etwa 4 kW ausgelegt ist;
- jedes Hinterrad (100 und 100') mit je einer Hinterrad-Scheibenbremsanlage ausgerüstet ist, die beim Anziehen des Bremshandgriffes (83) mit Hydraulikmitteldruck beaufschlagt wird, um einen regulären, hydraulisch bewirkten Bremsvorgang der Hinterräder (100, 100') auszuführen;
- am Elektrofahrzeug (2) ein, mit Datenspeicherkapazität und digitaler Datenverarbeitungskapazität ausgerüsteter Controller (15) montiert ist, der unter anderem dafür sorgt, dass im Regelbetrieb die von beiden Radnabenmotoren (90 und 90') zusammen gelieferte Nenndauerleistung 4 kW nicht übersteigt; und
- die Karosserie (3) in einem hinteren Fahrzeugbereich eine Stützkonstruktion (30) bildet, auf der ein wahlweise vorhandener, auswechselbarer Transportbehälter (120, 130) abstützbar und daran mit Hilfe eines Schnellverschlusssystems festhaltbar ist;
**dadurch gekennzeichnet, dass**
- jede Hinterrad-Scheibenbremsanlage zusätzlich mit einer integrierten, vom Controller (15) kontrollierten, elektromechanischen Parkbremse ausgerüstet ist, deren Betätigung eine Drehung jedes Hinterrades(100, 100') verhindert, was einen Parkbremsmodus einstellt; und
- das Schnellverschlusssystem eine oder mehrere Verbindungseinrichtung(en) aufweist, wobei jede Verbindungseinrichtung
-- einen Riegel (142, 145) hat, der von einer Bodenwand (121) am Transportbehälter (120, 130) nach außen absteht; und
-- eine, an der Stützkonstruktion (30) dauerhaft angebrachte und mit einem verstellbaren Sperrglied ausgerüstete Verriegelungseinrichtung (140) hat, welche im Falle des auf der Stützkonstruktion (30) abgestützten Transportbehälters (120, 130) dessen Riegel (142, 145) aufnimmt und mit dem verstellbaren Sperrglied wahlweise festhält, das hierzu eine den Riegel (142, 145) festhaltende Position, nachstehend: Riegel-Festhalte-Position oder eine, vom Riegel (142, 145) entfernte Position, nachstehend: Riegel-Freigabe-Position einnehmen kann; und
- dafür gesorgt ist, dass das Sperrglied nur dann aus der Riegel-Festhalte-Position in die Riegel-Freigabe-Position verstellt werden kann, wenn sich jedes Hinterrad (100, 100') im Parkbremsmodus befindet.

2. Dreirädriges Elektrofahrzeug nach Anspruch 1,
**dadurch gekennzeichnet, dass**
am Elektrofahrzeug (2), insbesondere an dessen Fahrzeuglenker (81), ein elektromechanischer Parkbremsschalter (88) angebracht ist, dessen Betätigung - mit Unterstützung durch den Controller (15) - den Parkbremsmodus initiiert, oder einen bestehenden Parkbremsmodus deaktiviert.

3. Dreirädriges Elektrofahrzeug nach Anspruch 2,
**dadurch gekennzeichnet, dass**
- der Verriegelungseinrichtung (140) ein Riegel-Position-Sensor zugeordnet ist, der eine Anwesenheit oder Abwesenheit des Riegels (142, 145) an/in der Verriegelungseinrichtung (142, 145) erfasst und bei Abwesenheit des Riegels (142, 145) ein Riegel-Abwesend-Signal sowie bei Anwesenheit des Riegels (142, 145) ein Riegel-Anwesend-Signal generiert und das jeweils generierte Signal an den Controller (15) übermittelt;
- der Verriegelungseinrichtung (140) ein Sperrglied-Position-Sensor zugeordnet ist, der bei Anwesenheit des Sperrgliedes in der Riegel-Festhalte-Position ein Sperrglied-Anwesend-Signal generiert und an den Controller (15) übermittelt; und
- der Controller (15) auf eine Betätigung des Parkbremsschalters (88) hin eine Deaktivierung eines aktivierten Parkbremsmodus nur dann veranlasst
--wenn am Controller (15) gleichzeitig ein Riegel-Abwesend-Signal anliegt; oder
-- wenn am Controller (15) gleichzeitig ein Riegel-Anwesend-Signal und ein Sperrglied-Anwesend-Signal anliegt.

4. Dreirädriges Elektrofahrzeug nach Anspruch 1,
**dadurch gekennzeichnet, dass**
- eine an und längs der Stützkonstruktion (30) verschiebbar gehaltene und geführte Verriegelungsstange vorhanden ist, die einen vorderen Endabschnitt hat, der das Sperrglied bildet, und die einen dazu entfernten hinteren Endabschnitt hat, der ein Griffstück bildet, das sich typischerweise im Bereich einer Fahrzeugrückwand (8) befindet und dort von einer Bedienungsperson gegriffen werden kann, die von Hand und mechanisch die Verriegelungsstange so verstellt, dass das Sperrglied die Riegel-Festhalte-Position oder die Riegel-Freigabe-Position einnimmt; und
- der Riegel (145) ein gerades längliches Vierkantstück (147) aufweist, in dem
- orthogonal zu dessen Längsrichtung - eine Bohrung (148) ausgespart ist, in welche das Sperrglied eintritt, wenn das Sperrglied die Riegel-Festhalte-Position einnimmt.

5. Dreirädriges Elektrofahrzeug, nämlich ein dreirädriges Kleinkraftrad für die Güterbeförderung, das für reinen Elektroantrieb ausgelegt ist, und das die gesetzlichen Vorgaben aus der Verordnung (EU) Nr. 168/13 des Europäischen Parlaments und des Rates vom 15. Januar 2013 für Fahrzeuge der EG-Fahrzeugklasse L2e, hier insbesondere der Unterklasse L2e-U erfüllt, wobei
- das Elektrofahrzeug (2) eine steife, selbsttragende, in Skelettkarosserie-Bauweise ausgeführte Karosserie (3) hat, deren Skelettelemente überwiegend aus metallischen, runden Rohren und hohlen Vierkantprofilen bestehen, die zumeist miteinander verschweißt sind;
- an einem Vorderende (6) der Karosserie (3) eine Teleskopfedergabel (80) schwenkbar angelenkt ist, an der ein Vorderrad (70) und ein Fahrzeuglenker (81) mit verschiedenen Bedienungselementen, einschließlich einem Bremshandgriff (83) und einem Beschleunigungsdrehgriff (82) montiert ist;
- das Elektrofahrzeug (2) zwei elektromotorisch angetriebene Hinterräder (100 und 100') hat, die je über je eine Radaufhängung an der Karosserie (3) gehalten sind;
- an jedem Hinterrad (100 und 100') zum elektromotorischen Antrieb je ein Radnabenmotor (90, 90') getriebelos befestigt ist, der je mit einer integrierten Motorsteuerung versehen ist, und der je für eine maximale Nenndauerleistung größer 2 kW und kleiner 6 kW ausgelegt ist, insbesondere für eine maximale Nenndauerleistung von etwa 4 kW ausgelegt ist;
- jedes Hinterrad (100 und 100') mit je einer Hinterrad-Scheibenbremsanlage ausgerüstet ist, die beim Anziehen des Bremshandgriffes (83) mit Hydraulikmitteldruck beaufschlagt wird, um einen regulären, hydraulisch bewirkten Bremsvorgang der Hinterräder (100, 100') auszuführen;
- am Elektrofahrzeug (2) ein, mit Datenspeicherkapazität und digitaler Datenverarbeitungskapazität ausgerüsteter Controller (15) montiert ist, der unter anderem dafür sorgt, dass im Regelbetrieb die von beiden Radnabenmotoren (90 und 90') zusammen gelieferte Nenndauerleistung 4 kW nicht übersteigt; und
- die Karosserie (3) in einem hinteren Fahrzeugbereich eine Stützkonstruktion (30) bildet, auf der ein wahlweise vorhandener, auswechselbarer Transportbehälter (120, 130) abstützbar und daran mit Hilfe eines Schnellverschlusssystems festhaltbar ist;
**dadurch gekennzeichnet, dass**
- jede Hinterrad-Scheibenbremsanlage zusätzlich mit einer integrierten, vom Controller (15) kontrollierten, elektromechanischen Parkbremse ausgerüstet ist, deren Betätigung eine Drehung jedes Hinterrades (100, 100') verhindert, was einen Parkbremsmodus einstellt; und
- das Schnellverschlusssystem eine oder mehrere Verbindungseinrichtung(en) aufweist, wobei jede Verbindungseinrichtung
- - einen Riegel (142, 145) hat, der von einer Bodenwand (121) am Transportbehälter (120, 130) nach außen absteht; und
- - eine, an der Stützkonstruktion (30) dauerhaft angebrachte Verriegelungseinrichtung (140) hat, welche im Falle des auf der Stützkonstruktion (30) abgestützten Transportbehälters (120, 130) dessen Riegel (142, 145) aufnimmt, und
- diese Verriegelungseinrichtung (140) einen, vom Controller (15) gesteuerten ersten Elektromotor (160) oder alternativen Elektromotor (170) sowie ein, mit Hilfe des jeweiligen Elektromotors (160, 170) verstellbares Sperrglied (157) hat, das wahlweise eine den Riegel (142, 145) festhaltende Position, nachstehend: Riegel-Festhalte-Position oder eine, vom Riegel (142, 145) entfernte Position, nachstehend: Riegel-Freigabe-Position einnehmen kann; und
- der Controller(15) dafür sorgt, dass der jeweilige Elektromotor (160, 170) das Sperrglied (157) nur dann aus der Riegel-Festhalte-Position in die Riegel-Freigabe-Position verstellen kann, wenn sich jedes Hinterrad (100, 100') im Parkbremsmodus befindet.

6. Dreirädriges Elektrofahrzeug nach Anspruch 5,
**dadurch gekennzeichnet, dass**
am Elektrofahrzeug (2), insbesondere an dessen Fahrzeuglenker (81), ein elektromechanischer Parkbremsschalter (88) angebracht ist, dessen Betätigung - mit Unterstützung durch den Controller (15) - den Parkbremsmodus initiiert, oder einen bestehenden Parkbremsmodus deaktiviert.

7. Dreirädriges Elektrofahrzeug nach Anspruch 5,
**dadurch gekennzeichnet, dass**
am Elektrofahrzeug (2), hier insbesondere am Fahrzeuglenker (81), ein elektromechanischer Verriegelungsschalter (79) angebracht ist, den eine Bedienungsperson in eine Verriegelung-Ein-Stellung oder in eine Verriegelung-Aus-Stellung verstellen kann; und
ein solcher Schalterstellungswechsel dem Controller (15) als Verriegelungs-Zustand-Wechsel-Signal zugeleitet, wird der daraufhin den jeweiligen Elektromotor (160 oder 170) so ansteuert, dass dieser in der Verriegelung-Ein-Stellung das Sperrglied (157) aus der Riegel-Freigabe-Stellung in die Riegel-Festhalte-Stellung verstellt oder alternativ und entsprechend in der Verriegelung-Aus-Stellung das Sperrglied (157) aus der Riegel-Festhalte-Stellung in die Riegel-Freigabe-Stellung verstellt.

8. Dreirädriges Elektrofahrzeug nach Anspruch 5,
**dadurch gekennzeichnet, dass**
der Riegel (145) ein gerades längliches Vierkantstück (147) aufweist, in dem - orthogonal zu dessen Längsrichtung - eine Bohrung (148) ausgespart ist, in welche das Sperrglied (157) eintritt, wenn das Sperrglied (157) die Riegel-Festhalte-Position einnimmt.

9. Dreirädriges Elektrofahrzeug nach Anspruch 8,
**dadurch gekennzeichnet, dass**
das Vierkantstück (147) einen Schenkel eines 90°Grad-Winkelstückes bildet, das einen weiteren Schenkel (146) hat, der parallel zur Transportbehälter-Bodenwand (121) ausgerichtet und an dieser befestigt ist.

10. Dreirädriges Elektrofahrzeug nach Anspruch 5,
**dadurch gekennzeichnet, dass**
der Riegel (142) einen geraden länglichen runden Zapfen bildet,
- der einstückig an einer Befestigungsplatte (141) angeformt ist, die an einer Unterseite einer Transportbehälter-Bodenwand (121) anbringbar ist;
- der einen Zapfenmantel (143) hat, in dem eine umlaufende Zapfennut (144) ausgespart ist; und
die Verriegelungseinrichtung (140) einen Schlosskörper (150) aufweist,
- der eine Aufnahmebohrung (153) hat, in welche der Riegel (142) eintreten kann;
- der ferner eine, die Aufnahmebohrung (153) teilweise schneidende Sperrbohrung (154) hat, in welche das Sperrglied (157) eintreten kann und darin verschiebbar geführt ist; und
in der Riegel-Festhalte-Position
- der Riegel (142) in die Aufnahmebohrung (153) eingeführt ist;
- das Sperrglied (157) in die Sperrbohrung (154) eingeführt ist; und
- ein Sperrgliedabschnitt (158) einen gemeinsamen Volumenabschnitt in der Aufnahmebohrung (153), in der Zapfennut (144) und in der Sperrbohrung (154) besetzt und damit den Riegel (142) formschlüssig in dem Schlosskörper (150) festhält.

11. Dreirädriges Elektrofahrzeug nach Anspruch 5
**dadurch gekennzeichnet, dass**
die Stützkonstruktion (30) über jedem Hinterrad (100 und 100') je eine paarweise Anordnung aus sich je in Fahrzeuglängsrichtung erstreckendem, oberen äußeren Längsträger (22, 22') und oberen inneren Längsträger (23, 23') aufweist; und am oberen inneren Längsträger (23, 23') eine vertikal abstehende und auf den oberen äußeren Längsträger (22, 22') zu gerichtete Montageplatte (108) angeschweißt ist, an dem die Verriegelungseinrichtung (140), hier insbesondere deren Schlosskörper (150) dauerhaft angebracht ist.

12. Dreirädriges Elektrofahrzeug nach Anspruch 5,
**dadurch gekennzeichnet, dass**
der zur Verriegelungseinrichtung (140) gehörende alternative Elektromotor (170) eine Spindel (173) treibt, welche das Sperrglied (157) verstellt.

13. Dreirädriges Elektrofahrzeug nach Anspruch 5,
**dadurch gekennzeichnet, dass**
der zur Verriegelungseinrichtung (140) gehörende erste Elektromotor (160) eine motorisch angetriebene Welle (162) hat, die einen Hebel (163) verschwenkt, der über ein Verbindungsstück (164) gelenkig mit dem Sperrglied (157) gekoppelt ist.

14. Dreirädriges Elektrofahrzeug nach Anspruch 10,
**dadurch gekennzeichnet, dass**
der Verriegelungseinrichtung (140) ein Riegel-Position-Sensor zugeordnet ist, der eine Anwesenheit oder Abwesenheit des Riegels (142, 145) in der Verriegelungsposition in der Aufnahmebohrung (153) im Schlosskörper (150) erfasst und bei Abwesenheit des Riegels (142, 145) in der Verriegelungsposition ein Riegel-Abwesend-Signal sowie bei Anwesenheit des Riegels (142, 145) in der Verriegelungsposition ein Riegel-Anwesend-Signal generiert und das jeweils generierte Signal an den Controller (15) übermittelt.

15. Dreirädriges Elektrofahrzeug nach Anspruch 5,
**dadurch gekennzeichnet, dass**
der Verriegelungseinrichtung(140) ein Sperrglied-Position-Sensor zugeordnet ist, der bei Anwesenheit des Sperrgliedes (157) in der Riegel-Festhalte-Position ein Sperrglied-Anwesend-Signal generiert und an den Controller (15) übermittelt.

16. Dreirädriges Elektrofahrzeug nach Anspruch 14, 15 und 6,
**dadurch gekennzeichnet, das**
der Controller (15), auf eine Betätigung des Parkbremsschalters (88) durch eine Bedienungsperson hin, eine Deaktivierung eines aktivierten Parkbremsmodus nur dann veranlasst
- wenn am Controller (15) gleichzeitig ein Riegel-Abwesend-Signal anliegt; oder
- wenn am Controller (15) gleichzeitig ein Riegel-Anwesend-Signal und ein Sperrglied-Anwesend-Signal anliegt.

17. Dreirädriges Elektrofahrzeug nach Anspruch 1 und Anspruch 5
**dadurch gekennzeichnet, dass**
an der Teleskopfedergabel (80) ein Fahrzeuglenker (81) befestigt ist,
an dem ein Bremshandgriff (83) auslenkbar angebracht ist,
dessen Auslenkung eine zweifache Bremswirkung verursacht, nämlich
- zuerst eine Betätigung eines elektrischen Bremsschalters, der daraufhin ein elektrisches Bremssignal generiert, das dem Controller (15) zugeführt wird, der daraufhin ein elektrisches Motorbremssignal erzeugt, das den beiden Motorsteuerungen zugeführt wird, die daraufhin jeden Motor (90, 90') in einen Motorbremsmodus steuern, in welchem Fahrzeugbewegungsenergie rekuperativ in elektrische Energie gewandelt wird, die den Fahrzeugbatterien (60) zugeführt wird (Motorbremsmodus); und
- anschließend eine weitere Auslenkung des Bremshandgriffes (83) Hydraulikmitteldruck aufbaut, der über Hydraulikmittelleitungen (86) den Hinterad-Scheibenbremsanlagen zugeführt wird, um einen regulären, hydraulisch bewirkten Bremsvorgang der Hinterräder (100, 100') auszuführen; und
- schließlich der Controller (15), nach entsprechender Betätigung eines Parkbremsschalters (88) durch die Bedienungsperson und Prüfung der aktuellen Fahrzeuggeschwindigkeit, bei einer Fahrzeuggeschwindigkeit gleich/kleiner 2 km/h, die elektromechanischen Parkbremsen in beiden Hinterrad-Scheibenbremsanlagen aktiviert, um beide Hinterräder (100, 100') in einen Parkbremsmodus zu versetzen, in dem eine Drehung der Hinterräder (100, 100') verhindert ist.

## Claims

1. Three-wheel electric vehicle, namely a three-wheel small power vehicle for goods transport, which is designed for pure electric drive, and which meets the legal requirements from Regulation (EU) No 168/13 of the European Parliament and of the Council dated 15 January 2013 with regard to vehicles of the EG vehicle class L2e, in this case particular the subclass L2e-U, wherein
- the electric vehicle (2) has a rigid, self-supporting vehicle body (3) designed in a skeletal body design, the skeletal elements thereof consist predominantly of metallic, round pipes and hollow square profiles, which are mostly welded together;
- a telescopic suspension fork (80) is pivotally connected to a front end (6) of the vehicle body (3), on which a telescopic suspension fork (80) a front wheel (70) and a vehicle handlebar (81) with various operating elements, including a brake handle (3) and a rotary acceleration grip (82) are mounted;
- the electric vehicle (2) has two electric motor-driven rear wheels (100 and 100 ') which are each held at the vehicle body (3) via a respective wheel suspension;
- a wheel hub motor (90, 90 ') is mounted on each rear wheel (100, 100 ') for electric motor drive in a gearless manner, each wheel hub motor (90, 90 ') is provided with an integrated motor control, and is designed for a maximum rated duration power greater than 2 kW and less than 6 kW, in particular for a maximum rated duration power of approximately 4 kW;
- each rear wheel (100, 100 ') is equipped with a rear wheel disc brake system, which is driven by hydraulic pressure medium when the brake handle (83) is operated in order to perform a regular, hydraulically effected braking action of the rear wheels (100, 100 ');
- a controller (15) equipped with a data storing capacity and with a data processing capacity is mounted on the electric vehicle (2), which, among others, ensures that in regular operation mode the rated duration power delivered by the two wheel hub motors (90, 90 ') does not exceed 4 kW; and
- the vehicle body (3) forms, in a rear vehicle area thereof, a supporting structure (30) on which an optionally present, replaceable transport container (120, 130) can be supported and can be secured thereto by means of a quick-action securing system;
**characterized in that**
- each rear wheel disc brake system is additionally equipped with an integrated electromechanical parking brake controlled by the controller (15), an actuation of this parking brake prevents a rotation of each rear wheel (100, 100 ') and sets a parking brake mode; and
- the quick-action securing system comprises one or more connecting devices, wherein each connecting device
- - has a latch (142, 145) which projects outwardly from a bottom wall on the transport container (120, 130); and
-- has a locking device (140) permanently attached to the supporting structure (30) and equipped with an adjustable locking member, which, in the case of the transport container (129, 130) is supported on the supporting structure (30), receives said latch (142, 145) and optionally holds said latch (142, 145) with the adjustable locking member, which can assume a position holding the latch (142, 145), hereinafter termed: latch-holding position, or can assume a position apart from the latch (142, 145), hereinafter termed: latch-release position; and
- it is ensured that the locking member can only be adjusted from the latch-holding position to the latch-release position when each rear wheel (100, 100 ') attends the parking brake mode.

2. Three-wheel electric vehicle according to claim 1,
**characterized in that**
an electromechanical parking brake switch (88) is attached to the electric vehicle (2), particularly to its handlebar (81), and an actuation of the electromechanical parking brake switch (88) initiates - assisted by the controller (15) - the parking brake mode, or deactivates an existing parking brake mode.

3. Three-wheel electric vehicle according to claim 2,
**characterized in that**
- the locking device (140) comprises a latch position sensor which realizes presence or absence of the latch (142, 145) at/in the locking device (140), and which latch position sensor generates - in case of absence of the latch (142, 145) - a latch-absent signal or generates - in case of presence of the latch (142, 145) - a latch-present signal, and the respectively generated signal is transmitted to the controller (15); and
- the locking device (140) comprises a locking member position sensor which realizes the presence of the locking member in the latch-holding position, and which locking member position sensor generates - in case of presence of the locking member in the latch-holding position a locking member-present signal - and transmits said locking member-present signal to the controller (15); and
- following an activation of the parking brake switch (88), the controller (15) will cause a deactivation of an active parking brake mode only in case
-- when the latch-absent signal is present at the same time at the controller (15); or
-- when both, the latch-present signal and the locking member-present signal are commonly present at the same time at the controller (15).

4. Three-wheel electric vehicle according to claim 1,
**characterized in that**
- a locking rod is movably held and guided along the supporting structure (3), which locking rod has a front end portion forming the locking member and has a rear end portion forming a grip piece which is typically located in the region of a rear wall (8) of the vehicle and can be gripped there by an operator who manually and mechanically adjusts the locking rod such that the locking member assumes the latch-holding position or the latch-release position; and
- the latch (145) has a straight elongated square piece (147) in which - orthogonal to its longitudinal direction - a bore (148) is cut out, into which the locking member enters when the locking member assumes the latch-holding position.

5. Three-wheel electric vehicle, namely a three-wheel small power vehicle for goods transport, which is designed for pure electric drive, and which meets the legal requirements from Regulation (EU) No 168/13 of the European Parliament and of the Council dated 15 January 2013 with regard to vehicles of the EG vehicle class L2e, in this case particular the subclass L2e-U, wherein
- the electric vehicle (2) has a rigid, self-supporting vehicle body (3) designed in a skeletal body design, the skeletal elements thereof consist predominantly of metallic, round pipes and hollow square profiles, which are mostly welded together;
- a telescopic suspension fork (80) is pivotally connected to a front end (6) of the vehicle body (3), on which a telescopic suspension fork (80) a front wheel (70) and a vehicle handlebar (81) with various operating elements, including a brake handle (3) and a rotary acceleration grip (82) are mounted;
- the electric vehicle (2) has two electric motor-driven rear wheels (100 and 100 ') which are each held at the vehicle body (3) via a respective wheel suspension;
- a wheel hub motor (90, 90 ') is mounted on each rear wheel (100, 100 ') for electric motor drive in a gearless manner, each wheel hub motor (90, 90') is provided with an integrated motor control, and is designed for a maximum rated duration power greater than 2 kW and less than 6 kW, in particular for a maximum rated duration power of approximately 4 kW;
- each rear wheel (100, 100 ') is equipped with a rear wheel disc brake system, which is driven by hydraulic pressure medium when the brake handle (83) is operated in order to perform a regular, hydraulically effected braking action of the rear wheels (100, 100 ');
- a controller (15) equipped with a data storing capacity and with a data processing capacity is mounted on the electric vehicle (2), which, among others, ensures that in regular operation mode the rated duration power delivered by the two wheel hub motors (90, 90') does not exceed 4 kW; and
- the vehicle body (3) forms, in a rear vehicle area thereof, a supporting structure (30) on which an optionally present, replaceable transport container (120, 130) can be supported and can be secured thereto by means of a quick-action securing system;
**characterized in that**
- each rear wheel disc brake system is additionally equipped with an integrated electromechanical parking brake controlled by the controller (15), an actuation of this parking brake prevents a rotation of each rear wheel (100, 100 ') and sets a parking brake mode; and
- the quick-action securing system comprises one or more connecting devices, wherein each connecting device
-- has a latch (142, 145) which projects outwardly from a bottom wall on the transport container (120, 130); and
-- has a locking device (140) permanently attached to the supporting structure (30), which locking device (140) - in the case of the transport container (120, 130) is supported on the supporting structure (30) - receives said latch (142, 145); and
- this locking device (140) has a first electric motor (160) or an alternative electric motor (170), both controlled by the controller (15), and further comprises a locking member (157) adjustable by means of the respective electric motor (160, 170), which locking member (157) may optionally assume a position holding the latch (142, 145), hereinafter termed: latch-holding position, or may assume a position apart from the latch (142, 145), hereinafter termed: latch-release position; and
- the controller (15) ensures that the respective electric motor (160, 170) can only move the locking member (157) from the latch-holding position to the latch-release position, when each rear wheel (100, 100 ') attends the parking brake mode.

6. Three-wheel electric vehicle according to claim 5,
**characterized in that**
an electromechanical parking brake switch (88) is attached to the electric vehicle (2), particularly to its handlebar (81), and an actuation of the electromechanical parking brake switch (88) initiates - assisted by the controller (15) - the parking brake mode, or deactivates an existing parking brake mode.

7. Three-wheel electric vehicle according to claim 5,
**characterized in that**
an electromechanical locking switch (79) is attached to the electric vehicle (2), particularly to its handlebar (81), and an operator can adjust said electromechanical locking switch (79) to assume a locking-on position or to assume a locking-off position; and such a switch position change is sent to the controller (15) as a locking state change signal; thereupon, the controller (15) will instruct the respective electric motor (160 or 170) - in case when the locking switch (79) assume the locking-on position - to move the locking member (157) from the latch-release position into the latch-holding position or alternatively - in case when the locking switch (79) assumes the locking-off position - to move the locking member (157) from the latch-holding position into the latch-release position.

8. Three-wheel electric vehicle according to claim 5,
**characterized in that**
the latch (145) comprises a straight, elongated square piece (147) in which - orthogonal to its longitudinal direction - a bore (148) is cut out, into which the locking member (157) enters when the locking member (157) assumes the latch-holding position.

9. Three-wheel electric vehicle according to claim 8,
**characterized in that**
the square piece (147) forms a leg of a 90° angle piece having a further leg (146) which is aligned parallel to the transport container bottom wall (121) and is attached thereto.

10. Three-wheel electric vehicle according to claim 5,
**characterized in that**
the latch (142) forms a straight, elongated round pin,
- which is integrally attached at a fastening plate (141) which ca be attached to an underside of a transport container bottom wall (121); and
- which round pin has a pin jacket (143) in which a circumferential pin groove (144) is recessed; and
the locking device (140) comprises a lock body (150),
- which lock body (150) has a receiving bore (153) into which the latch (142) can enter;
- and which lock body (150) has a locking bore (154) partially intersecting the receiving bore (153), and the locking member (157) can enter said locking bore (154) and is slidably guided therein; and
in the latch-holding position
- the latch (142) is inserted into the receiving bore (153);
- the locking member (157) is inserted into the locking bore (154); and
- a locking member portion (158) occupies a common volume portion in the receiving bore (153), in the pin groove (144) and in the locking bore (154), with the result that the latch (142) is secured in a form-fitting manner within the lock body (150).

11. Three-wheel electric vehicle according to claim 5,
**characterized in that**
the supporting structure (30) arranged above each rear wheel (100, 100 ') has a pair-wise arrangement of upper outer longitudinal support members (22, 22 ') and upper inner longitudinal support members (23, 23 '), each extending in the longitudinal direction of the electric vehicle (2); and
a vertically projecting and towards the upper outer longitudinal support members (22, 22 ') directed mounting plate (108) is welded to the upper inner longitudinal support members (23, 23 '); and
the locking device (140), here particularly the lock body (150), is permanently attached to said mounting plate (108).

12. Three-wheel electric vehicle according to claim 5,
**characterized in that**
the alternative electric motor (170) belonging to the locking device (140) drives a spindle (173) which adjusts the locking member (157).

13. Three-wheel electric vehicle according to claim 5,
**characterized in that**
the first electric motor (160) belonging to the locking device (140) has a motor-driven shaft (162) which pivots a lever (163) which is connected in an articulated manner via a connecting piece (164) with the locking member (157).

14. Three-wheel electric vehicle according to claim 10,
**characterized in that**
the locking device (140) is provided with a latch position sensor which detects the presence or the absence of the latch (142, 145) in the locking position provided in the receiving bore (153) within the lock body (150); and
said latch position sensor generates a latch-absent signal whenever the latch (142, 145) is absent in the locking position; and
said latch position sensor generates a latch-present signal whenever the latch (142, 145) is present in the locking position; and
the respectively generated signal is transmitted to the controller (15).

15. Three-wheel electric vehicle according to claim 5,
**characterized in that**
the locking device (140) is provided with a locking member position sensor which generates a locking member-present signal whenever the locking member (157) is present in the locking position; and
the respectively generated locking member-present signal is transmitted to the controller (15).

16. Three-wheel electric vehicle according to claims 14, 15 and 6,
**characterized in that**
following an activation of the parking brake switch (81) by an operator,
the controller (15) will cause a deactivation of an active parking brake mode only in case
- when the latch-absent signal is present at the same time at the controller (15); or
- when both, the latch-present signal and the locking member-present signal are commonly present at the same time at the controller (15).

17. Three-wheel electric vehicle according to claim 1 and claim 5,
**characterized in that**
a vehicle handlebar (81) is fastened to the telescopic suspension fork (80),
a brake handle (83) is deflectable attached to said vehicle handlebar (81),
a deflection of said brake handle (83) causes a two-fold braking effect, namely
- a first deflection of the brake handle (83) actuates an electrical brake switch, which thereupon generates an electrical brake signal which is transmitted to the controller (15), which thereupon generates an electrical motor brake signal which is then supplied to the two motor controllers, which thereupon control each motor (90, 90 ') into an engine braking mode in which vehicle movement energy is recuperatively converted into electrical energy, which is supplied to the vehicle batteries (60); the result is an engine braking mode; and
- subsequently, a further deflection of the brake handle (83) builds up hydraulic medium pressure which is supplied via hydraulic medium lines (86) to the rear wheel disc brake systems in order to perform a regular, hydraulically effected braking action of the rear wheels (100, 100 '); and
- finally, following a corresponding actuation of a parking brake switch (88) by the operator, the controller (15) will check the current vehicle speed, and will - at a vehicle speed equal to/less than 2 km/h - activate the electromechanical parking brakes in both rear wheel brake systems to transfer both rear wheels (100, 100 ') in the parking brake mode in which rotation of the rear wheels (100, 100 ') is prevented.

## Revendications

1. Véhicule électrique à trois roues, à savoir petite motocyclette à trois roues pour le transport de marchandises, qui est conçu pour un simple entraînement électrique et qui satisfait aux prescriptions légales de l'ordonnance (EU) No.168/13 du Parlement européen et du Conseil du 15 janvier 2013 pour des véhicules de la classe L2e de véhicules CE, dans ce cas, en particulier de la sous-classe L2e-U, dans lequel
- le véhicule (2) électrique a une carrosserie (3) rigide, autoportante, réalisée en mode de construction en carrosserie squelette, dont les éléments de squelette sont constitués d'une manière prépondérante de tubes métalliques de section droite circulaire et de profilés creux à quatre pans, qui, pour la plupart, sont soudés entre eux ;
- à une extrémité (6) avant de la carrosserie (3) est articulée à pivotement une fourche (80) à ressort télescopique, sur laquelle est montée une roue (70) avant et un guidon (81) de véhicule ayant divers éléments de manoeuvre, y compris une poignée (83) de frein et une poignée (82) tournante d'accélération ;
- le véhicule (2) électrique a deux roues (100 et 100') arrières, qui sont entraînées par moteur électrique et qui sont retenues à la carrosserie (3) par respectivement une suspension de roue ;
- à chaque roue (100 et 100') arrière est fixé, sans transmission, pour l'entraînement par moteur électrique respectivement un moteur (90, 90') de moyeu de roue, qui est pourvu respectivement d'une commande intégrée de moteur et qui est conçu pour une puissance continue nominale maximum plus grande que 2 kW et plus petite que 6 kW, en particulier pour une puissance continue nominale maximum d'environ 4 kW ;
- chaque roue (100 et 100') arrière est équipée respectivement d'une installation de frein à disque de roue arrière, qui, lorsque la poignée (83) de frein est serrée, est alimentée en une pression de fluide hydraulique pour effectuer une opération de freinage des roues (100, 100') arrières régulière, provoquée hydrauliquement ;
- sur le véhicule (2) électrique est montée une unité (15) de commande, qui est équipée d'une capacité de mémoire de données et d'une capacité de traitement de données numériques et qui sert entre autres à ce que, en fonctionnement réglé, la puissance 4 kW continue nominale, fournie ensemble par les deux moteurs (90 et 90') de moyeux de roues, ne dépasse pas 4 kW ; et
- la carrosserie (3) forme, dans une partie arrière du véhicule, une construction (30) d'appui, sur laquelle un récipient (120, 130) de transport remplaçable et présent à volonté peut être appuyé et être fixé à l'aide d'un système de fermeture rapide ;
**caractérisé en ce que**
- chaque installation de frein à disque de roue arrière est équipée en outre d'un frein de stationnement électromécanique intégré, qui est commandé par l'unité (15) de commande et dont l'actionnement empêche une rotation de chaque roue (100, 100') arrière, ce qui établit un mode de frein de stationnement ; et
- le système de fermeture rapide a un ou plusieurs dispositifs de liaison, dans lequel chaque dispositif de liaison
-- a un verrou (142, 145), qui fait saillie vers l'extérieur à partir d'une paroi (121) de fond du récipient (120, 130) de transport ; et
-- a un dispositif (140) de verrouillage, monté de manière permanente sur la construction (30) d'appui et équipé d'un élément de blocage réglable, qui, dans le cas où le récipient (120, 130) de transport est appuyé sur la construction (30) d'appui, en reçoit le verrou (142, 145) et le fixe à volonté par l'élément de blocage réglable, qui, à cet effet peut prendre une position maintenant fixe le verrou (142, 145), ci-après :
position de fixation du verrou ou une position éloignée du verrou (142, 145), ci-après :
position de libération du verrou ; et
- fait en sorte que l'élément de blocage ne puisse passer de la position de la fixation du verrou à la position de libération du verrou que si chaque roue (100, 100') arrière se trouve dans le mode de frein de stationnement.

2. Véhicule électrique à trois roues suivant la revendication 1,
**caractérisé en ce que**,
sur le véhicule (2) électrique, en particulier sur son guidon (81) de véhicule, est monté un interrupteur (88) électromécanique de frein de stationnement, dont l'actionnement - avec assistance par l'unité (15) de commande - lance le mode de frein de stationnement ou désactive un mode de frein de stationnement existant.

3. Véhicule électrique à trois roues suivant la revendication 2,
**caractérisé en ce que**,
- au dispositif (140) de verrouillage est affecté un capteur de position de verrou, qui détecte une présence ou une absence du verrou (142, 145) sur/dans le dispositif (142, 145) de verrouillage et qui, en absence du verrou (142, 145), crée un signal d'absence de verrou, ainsi qu'en présence du verrou (142, 145), un signal de présence du verrou et transmet le signal créé respectivement à l'unité (15) de commande :
- au dispositif (140) de verrouillage est affecté un capteur de position d'élément de blocage, qui, en présence de l'élément de blocage dans la position de fixation du verrou, crée un signal de présence de l'élément de blocage et le transmet à l'unité (15) de commande ; et
- l'unité (15) de commande, sur un actionnement de l'interrupteur (88) de frein de stationnement, ne provoque une désactivation d'un mode de frein de stationnement activé que
-- lorsqu'un signal d'absence du verrou s'applique en même temps à l'unité (15) de commande ; ou
-- lorsqu'un signal de présence du verrou et un signal de présence de l'élément de blocage s'appliquent à l'unité (15) de commande en même temps.

4. Véhicule électrique à trois roues suivant la revendication 1,
**caractérisé en ce qu'**
- il y a une barre de verrouillage, qui est guidée, qui est maintenue coulissante sur et le long de la construction (30) d'appui et qui a un tronçon d'extrémité avant, qui forme l'élément de blocage, et qui a un tronçon d'extrémité arrière, qui en est éloigné et qui forme une pièce de préhension, qui se trouve typiquement dans la partie d'une paroi (8) arrière du véhicule et peut y être prise par une personne de service, qui règle à la main et mécaniquement la barre de verrouillage, de manière à ce que l'élément de blocage prenne la position de fixation du verrou ou la position de libération du verrou ; et
- le verrou (145) a une pièce (147) à quatre pans oblongue rectiligne, dans laquelle - orthogonalement à sa direction longitudinale - est ménagé un trou (148), dans lequel l'élément de blocage pénètre lorsque l'élément de blocage prend la position de fixation du verrou.

5. Véhicule électrique à trois roues, à savoir petite motocyclette à trois roues pour le transport de marchandises, qui est conçu pour un simple entraînement électrique et qui satisfait aux prescriptions légales de l'ordonnance (EU) No.168/13 du Parlement européen et du Conseil du 15 janvier 2013 pour des véhicules de la classe L2e de véhicules CE, dans ce cas, en particulier de la sous-classe L2e-U, dans lequel
- le véhicule (2) électrique a une carrosserie (3) rigide, autoportante, réalisée en mode de construction en carrosserie squelette, dont les éléments de squelette sont constitués d'une manière prépondérante de tubes métalliques de section droite circulaire et de profilés creux à quatre pans, qui, pour la plupart, sont soudés entre eux ;
- à une extrémité (6) avant de la carrosserie (3) est articulée à pivotement une fourche (80) à ressort télescopique, sur laquelle est montée une roue (70) avant et un guidon (81) de véhicule ayant divers éléments de manoeuvre, y compris une poignée (83) de frein et une poignée (82) tournante d'accélération ;
- le véhicule (2) électrique a deux roues (100 et 100') arrières, qui sont entraînées par moteur électrique et qui sont retenues à la carrosserie (3) par respectivement une suspension de roue ;
- à chaque roue (100 et 100') arrière est fixé, sans transmission, pour l'entraînement par moteur électrique respectivement un moteur (90, 90') de moyeu de roue, qui est pourvu respectivement d'une commande intégrée de moteur et qui est conçu pour une puissance continue nominale maximum plus grande que 2 kW et plus petite que 6 kW, en particulier pour une puissance continue nominale maximum d'environ 4 kW ;
- chaque roue (100 et 100') arrière est équipée respectivement d'une installation de frein à disque de roue arrière, qui, lorsque la poignée (83) de frein est serrée, est alimentée en une pression de fluide hydraulique pour effectuer une opération de freinage des roues (100, 100') arrières régulière, provoquée hydrauliquement ;
- sur le véhicule (2) électrique est montée une unité (15) de commande, qui est équipée d'une capacité de mémoire de données et d'une capacité de traitement de données numériques et qui sert entre autres à ce que, en fonctionnement réglé, la puissance 4 kW continue nominale, fournie ensemble par les deux moteurs (90 et 90') de moyeux de roues ne dépasse pas 4 kW ; et
- la carrosserie (3) forme, dans une partie arrière du véhicule, une construction (30) d'appui, sur laquelle un récipient (120, 130) de transport remplaçable et présent à volonté peut être appuyé et être fixé à l'aide d'un système de fermeture rapide ;
**caractérisé en ce que**
- chaque installation de frein à disque de roue arrière est équipée en outre d'un frein de stationnement électromécanique intégré, qui est commandé par l'unité (15) de commande et dont l'actionnement empêche une rotation de chaque roue (100, 100') arrière, ce qui établit un mode de frein de stationnement ; et
- le système de fermeture rapide a un ou plusieurs dispositifs de liaison, dans lequel chaque dispositif de liaison
-- a un verrou (142, 145), qui fait saillie vers l'extérieur à partir d'une paroi (121) de fond du récipient (120, 130) de transport ; et
-- a un dispositif (140) de verrouillage monté de manière permanente sur la construction (30) d'appui, et qui, dans le cas où le récipient (120, 130) de transport est appuyé sur la construction (30) d'appui, en reçoit le verrou (142, 145), et
- ce dispositif (140) de verrouillage a un premier moteur (160) électrique commandé par l'unité (15) de commande ou un moteur (170) électrique d'alternance, ainsi qu'un élément (157) de blocage réglable à l'aide du moteur (160, 170) électrique respectif, qui peut prendre au choix une position de fixation du verrou (142, 145), ci-après : position de fixation du verrou ou une position éloignée du verrou (142, 145), ci-après : position de libération du verrou ; et
- l'unité (15) de commande fait en sorte que le moteur (160, 170) électrique respectif ne peut faire passer l'élément (157) de blocage de la position de fixation du verrou à la position de libération du verrou que si chaque roue (100, 100') arrière se trouve dans le mode de frein de stationnement.

6. Véhicule électrique à trois roues suivant la revendication 5,
**caractérisé en ce que**,
sur le véhicule (2) électrique, en particulier sur son guidon (81) de véhicule, est monté un interrupteur (88) électromécanique de frein de stationnement, dont l'actionnement - avec assistance par l'unité (15) de commande - lance le mode de frein de stationnement ou désactive un mode de frein de stationnement existant.

7. Véhicule électrique à trois roues suivant la revendication 5,
**caractérisé en ce que**
sur le véhicule (2) électrice, dans ce cas en particulier sur le guidon (81) du véhicule, est monté un interrupteur (79) électromécanique de verrouillage qu'une personne de service peut mettre dans une position fermée de verrouillage ou dans une position ouverte de verrouillage ; et
un tel changement de position de l'interrupteur est envoyé comme un signal de changement d'état de verrouillage à l'unité (15) de commande, qui ensuite commande le moteur (160 ou 170) électrique respectif, de manière à ce que celui-ci, dans la position de fermeture de verrouillage, fasse passer l'élément (157) de blocage de la position de libération du verrou à la position de fixation du verrou, ou en variante et d'une manière correspondante, dans la position d'ouverture de verrouillage de l'élément (157) de blocage de la position de fixation du verrou à la position de libération du verrou.

8. Véhicule électrique à trois roues suivant la revendication 5,
**caractérisé en ce que**
le verrou (145) a une pièce (147) à quatre pans droite oblongue, dans laquelle est ménagé - orthogonalement à sa direction longitudinale - un trou (148), dans lequel l'élément (157) de blocage pénètre, lorsque l'élément (157) de blocage prend la position de fixation du verrou.

9. Véhicule électrique à trois roues suivant la revendication 8,
**caractérisé en ce que**
la pièce (147) à quatre pans forme une branche d'une pièce d'équerre à 90°, qui a une autre branche (146), qui est dirigée parallèlement à la paroi (121) du fond de récipient de transport et qui y est fixée.

10. Véhicule électrique à trois roues suivant la revendication 5,
**caractérisé**
**en ce que** le verrou (142) forme un tenon de section droite circulaire, droit, oblong,
- qui est d'une pièce avec une plaque (141) de fixation, qui peut être montée sur une face inférieure d'une paroi (121) de fond du récipient de transport ;
- qui a une enveloppe (143) de tenon, dans laquelle est ménagée une rainure (144) de tenon faisant le tour ; et le dispositif (140) de verrouillage a un trou (150) de serrure
- qui a un trou (153) de réception, dans lequel le verrou (142) peut pénétrer ;
- qui a en outre un trou (154) de blocage en intersection en partie avec le trou (153) de réception, dans lequel l'élément (157) de blocage peut pénétrer et y être guidé ; et
dans la position de fixation du verrou
- le verrou (142) est introduit dans le trou (153) de réception ;
- l'élément (157) de blocage est introduit dans le trou (154) de blocage ; et
- une partie (158) de l'élément de blocage possède une partie en volume commune dans le trou (153) de réception, dans la rainure (144) du tenon et dans le trou (154) de blocage et fixe ainsi le verrou (142) à complémentarité de forme dans le corps (150) de serrure.

11. Véhicule électrique à trois roues suivant la revendication 5,
**caractérisé en ce que**
la construction (30) d'appui a, sur chaque roue (100 et 100') arrière, respectivement un agencement par paire composé de longerons (22, 22') extérieurs supérieurs s'étendant dans la direction longitudinale du véhicule et de longerons (23, 23') intérieurs supérieurs ; et
sur le longeron (23, 23') intérieur supérieur, est soudée une plaque (108) de montage en saillie verticalement et dirigée sur le longeron (22, 22') extérieur supérieur, à laquelle le dispositif (140) de verrouillage, dans ce cas en particulier le corps (150) de serrure, peut être monté de manière permanente.

12. Véhicule électrique à trois roues suivant la revendication 5,
**caractérisé en ce que**
le moteur (170) électrique en variante, appartenant au dispositif (140) de verrouillage, entraîne une broche (173), qui déplace l'élément (157) de blocage.

13. Véhicule électrique à trois roues suivant la revendication 5,
**caractérisé en ce que**
le premier moteur (160) électrique, appartenant au dispositif (140) de verrouillage, a un arbre (162) entraîné par un moteur, qui fait pivoter un levier (163), lequel est articulé à l'élément (157) de blocage par une pièce (164) de liaison.

14. Véhicule électrique à trois roues suivant la revendication 10,
**caractérisé en ce qu'**
au dispositif (140) de verrouillage est affecté un capteur de position de verrou, qui détecte une présence ou une absence du verrou (142, 145), dans la position de verrouillage dans le trou (153) de réception du corps (150) de serrure et, en l'absence du verrou (142, 145) dans la position de verrouillage, crée un signal d'absence de verrou, ainsi, qu'en présence du verrou (142, 145) dans la position de verrouillage, un signal de présence de verrou et transmet le signal créé respectivement à l'unité (15) de commande.

15. Véhicule électrique à trois roues suivant la revendication 5,
**caractérisé en ce que**
le dispositif (140) de verrouillage est affecté à un capteur de position d'élément de blocage, qui en présence de l'élément (157) de blocage dans la position de fixation du verrou, crée un signal de présence de l'élément de blocage et le transmet à l'unité (15) de commande.

16. Véhicule électrique à trois roues suivant la revendication 14, 15 et 6,
**caractérisé en ce que**
l'unité (15) de commande provoque, sur un actionnement de l'interrupteur (88) de frein de stationnement par une personne de service, une désactivation d'un mode de frein de stationnement activé, seulement
- lorsqu'un signal d'absence de verrou s'applique en même temps à l'unité (15) de commande ; ou
- lorsqu'un signal de présence de verrou et un signal de présence de l'élément de blocage s'appliquent à l'unité (15) de commande en même temps.

17. Véhicule électrique à trois roues suivant la revendication 1 et la revendication 5,
**caractérisé en ce qu'**
à la fourche (80) à ressort télescopique est fixé un guidon (81) de véhicule, sur lequel est monté, avec possibilité d'être déviée, une poignée (83) de frein, dont la déviation provoque un effet de freinage double, à savoir
- d'abord un actionnement d'un interrupteur électrique de frein, qui crée ensuite un signal électrique de frein, qui est envoyé à l'unité (15) de commande, laquelle produit ensuite un signal électrique de frein de moteur, qui est envoyé aux deux commandes de moteur, lesquelles ensuite commandent chaque moteur (90, 90') dans un mode de frein moteur, dans lequel de l'énergie de déplacement du véhicule est transformée par récupération en énergie électrique, qui est envoyée aux batteries (60) du véhicule (mode de frein moteur) ; et
- ensuite une autre déviation de la poignée (83) de frein établit une pression de fluide hydraulique, qui est envoyée par des lignes (86) de fluide hydraulique aux installations de frein à disque de roue arrière, afin d'effectuer une opération de freinage régulière et provoquée hydrauliquement des roues (100, 100') arrières ; et
- enfin l'unité (15) de commande, après actionnement correspondant d'un interrupteur (88) de frein de stationnement par la personne de service et contrôle de la vitesse en cours du véhicule, active, pour une vitesse du véhicule inférieure ou égale à 2 km/h, les freins électromécaniques de stationnement dans les deux installations de frein à disque de roue arrière, pour les deux roues (100, 100') arrières dans un mode de frein de stationnement, dans lequel une rotation des roues (100, 100') arrières est empêchée.
